(19) Europäisches Patentamt
European Patent Office
Office européen des brevets

(11) **EP 4 580 316 A1**

(12) **EUROPEAN PATENT APPLICATION**
published in accordance with Art. 153(4) EPC

(43) Date of publication:
**02.07.2025 Bulletin 2025/27**

(21) Application number: 23856954.5

(22) Date of filing: **23.06.2023**

(51) International Patent Classification (IPC):
*H05B 47/10* (2020.01)  *H05B 45/10* (2020.01)
*H05B 45/20* (2020.01)  *H05B 47/105* (2020.01)
*H05B 47/155* (2020.01)  *H05B 47/19* (2020.01)

(52) Cooperative Patent Classification (CPC):
**H05B 45/10; H05B 45/20; H05B 47/10;
H05B 47/105; H05B 47/155; H05B 47/19;
Y02B 20/40**

(86) International application number:
**PCT/JP2023/023330**

(87) International publication number:
**WO 2024/042837 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.08.2022 JP 2022134383**

(71) Applicant: **Japan Display Inc.
Tokyo 105-0003 (JP)**

(72) Inventor: **CHIEN, Chiehan
Tokyo 105-0003 (JP)**

(74) Representative: **MERH-IP Matias Erny Reichl
Hoffmann
Patentanwälte PartG mbB
Paul-Heyse-Straße 29
80336 München (DE)**

(54) **ILLUMINATION SYSTEM AND CONTROL DEVICE**

(57)     An illumination system and a control device that are capable of changing various settings of a plurality of illumination devices at once are provided. The illumination system includes: a plurality of illumination devices each including a light source and an optical element, the optical element being provided on an optical axis of the light source and capable of setting a light distribution state of light emitted from the light source in two directions of a first direction and a second direction intersecting the first direction; and a control device configured to control the illumination devices to change the light distribution states. The control device includes a touch sensor including a detection region in which a plurality of detection elements are provided, a display panel provided with a display region overlapping the detection region of the touch sensor in plan view, and a first storage circuit configured to store setting information at least including setting values of the light distribution states. The control device transmits the setting information to one, some, or all of the illumination devices when change of the setting value is performed, and each illumination device includes a second storage circuit configured to store the setting information transmitted from the control device.

FIG.17

**Description**

Field

The present invention relates to an illumination system and a control device.

Background

In a conventional illumination instrument, a light source such as an LED is combined with a thin lens provided with a prism pattern, and the distance between the light source and the thin lens is changed to change a light distribution angle. For example, an illumination instrument is disclosed (refer to Patent Literature 1, for example) in which the front of a transparent light bulb is covered by a liquid crystal light adjustment element, and the transmittance of a liquid crystal layer is changed to switch between directly-reaching light and scattering light.

Citation List

Patent Literature

Patent Literature 1: Japanese Patent Application Laid-open Publication No. H02-065001

Summary

Technical Problem

For example, in an illumination device including a liquid crystal cell for p wave polarization and a liquid crystal cell for s wave polarization, the diffusion degree of light in two directions can be controlled by driving the respective liquid crystal cells. It is desired to dispose, in the same space, a plurality of such highly functional illumination devices capable of setting the diffusion degree, light quantity, color temperature, and the like of light and change various setting values of the illumination devices at once.

The present invention is intended to provide an illumination system and a control device that are capable of changing various setting values of a plurality of illumination devices at once.

Solution to Problem

An illumination system according to an aspect of the present disclosure includes: a plurality of illumination devices each including a light source and an optical element, the optical element being provided on an optical axis of the light source and capable of setting a light distribution state of light emitted from the light source in two directions of a first direction and a second direction intersecting the first direction; and a control device configured to control the illumination devices to change the light distribution states. The control device includes a touch sensor including a detection region in which a plurality of detection elements are provided, a display panel provided with a display region overlapping the detection region of the touch sensor in plan view, and a first storage circuit configured to store setting information at least including setting values of the light distribution states. The control device is configured to transmit the setting information to one, some, or all of the illumination devices when change of the setting value is performed. Each illumination device includes a second storage circuit configured to store the setting information transmitted from the control device.

A control device according to an aspect of the present disclosure is configured to control a plurality of illumination devices each capable of setting a light distribution shape of light emitted from a light source in two directions of a first direction and a second direction intersecting the first direction. The control device includes: a touch sensor including a detection region in which a plurality of detection elements are provided; a display panel provided with a display region overlapping the detection region of the touch sensor in plan view; and a storage circuit configured to store setting information at least including setting values of the light distribution shapes. The setting information is transmitted to one, some, or all of the illumination devices when change of the setting value is performed.

Brief Description of Drawings

FIG. 1A is a side view illustrating an example of an illumination device according to an embodiment.
FIG. 1B is a perspective view illustrating an example of an optical element according to the embodiment.

FIG. 2 is a schematic plan view of a first substrate when viewed in a Dz direction.

FIG. 3 is a schematic plan view of a second substrate when viewed in the Dz direction.

FIG. 4 is a see-through diagram of a liquid crystal cell in which the first substrate and the second substrate are stacked in the Dz direction.

FIG. 5 is a sectional view along line A-A' illustrated in FIG. 4.

FIG. 6A is a diagram illustrating the alignment direction of an alignment film of the first substrate.

FIG. 6B is a diagram illustrating the alignment direction of an alignment film of the second substrate.

FIG. 7 is a multilayered structure diagram of the optical element according to the embodiment.

FIG. 8A is a conceptual diagram for description of change in shape of light by the optical element according to the embodiment.

FIG. 8B is a conceptual diagram for description of change in shape of light by the optical element according to the embodiment.

FIG. 8C is a conceptual diagram for description of change in shape of light by the optical element according to the embodiment.

FIG. 8D is a conceptual diagram for description of change in shape of light by the optical element according to the embodiment.

FIG. 9 is a conceptual diagram for conceptually describing control of the light diffusion degree of the illumination device according to the embodiment.

FIG. 10 is a schematic view illustrating an example of the configuration of an illumination system according to a first embodiment.

FIG. 11 is an exterior diagram illustrating an example of a control device according to the first embodiment.

FIG. 12 is a conceptual diagram illustrating an example of a touch detection region on a touch sensor.

FIG. 13 is a diagram illustrating an example of the control block configuration of a control device according to the first embodiment.

FIG. 14 is a diagram illustrating an example of the control block configuration of an illumination device according to the first embodiment.

FIG. 15A is a conceptual diagram illustrating an example of the display aspect of a setting change screen on the control device according to the first embodiment.

FIG. 15B is a conceptual diagram illustrating an example of the display aspect of the setting change screen on the control device according to the first embodiment.

FIG. 15C is a conceptual diagram illustrating an example of the display aspect of the setting change screen on the control device according to the first embodiment.

FIG. 15D is a conceptual diagram illustrating an example of the display aspect of the setting change screen on the control device according to the first embodiment.

FIG. 15E is a conceptual diagram illustrating an example of the display aspect of the setting change screen on the control device according to the first embodiment.

FIG. 16 is a diagram for description of the relation between the position on the setting change screen on the control device according to the first embodiment and the light diffusion degree.

FIG. 17 is a flowchart illustrating an example of setting change processing by the control device for the illumination device according to the first embodiment.

FIG. 18 is a conceptual diagram illustrating an example of a storage region in the control device for the illumination device according to the first embodiment.

FIG. 19A is a schematic view illustrating an example of the configuration of an illumination system according to a second embodiment.

FIG. 19B is a schematic view illustrating a specific coupling example in a case where an illumination control device is a DMX controller in the configuration of the illumination system according to the second embodiment. Description of Embodiments

Aspects (embodiments) of the present invention will be described below in detail with reference to the accompanying drawings. Contents described below in the embodiments do not limit the present invention. Components described below include those that could be easily thought of by the skilled person in the art and those identical in effect. Components described below may be combined as appropriate. What is disclosed herein is merely exemplary, and any modification that could be easily thought of by the skilled person in the art as appropriate without departing from the gist of the invention is contained in the scope of the present invention. For clearer description, the drawings are schematically illustrated for the width, thickness, shape, and the like of each component as compared to an actual aspect in some cases, but the drawings are merely exemplary and do not limit interpretation of the present invention. In the present specification and drawings, any element same as that already described with reference to an already described drawing is denoted by the same reference sign, and detailed description thereof is omitted as appropriate in some cases.

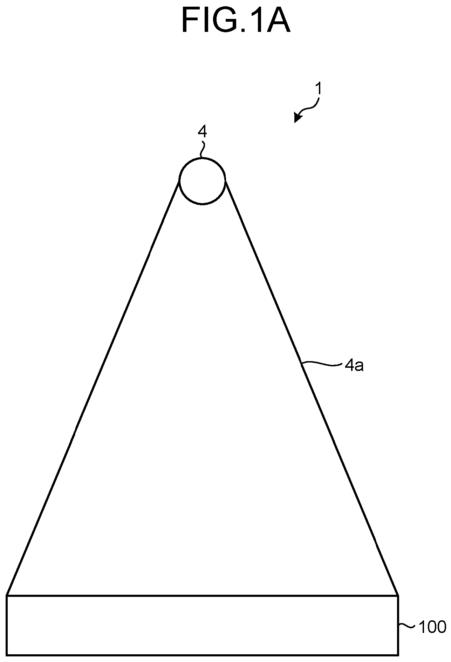

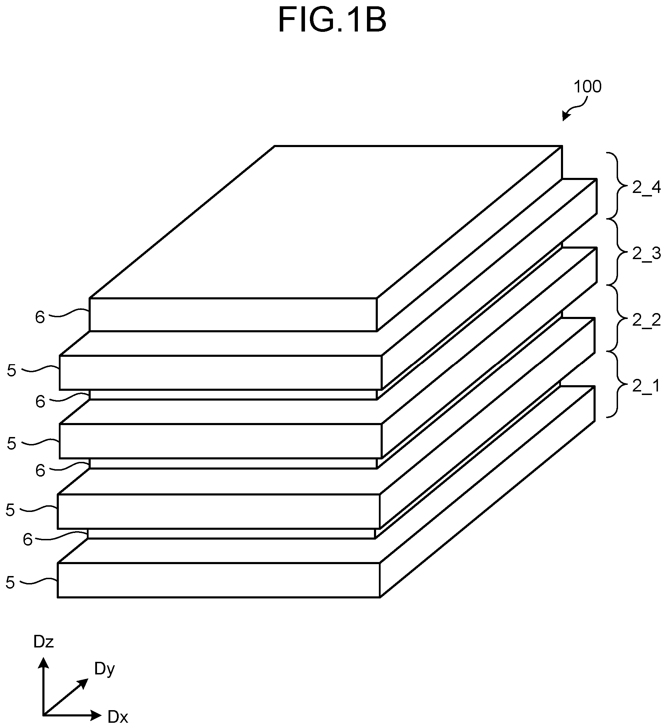

FIG. 1A is a side view illustrating an example of an illumination device according to an embodiment. FIG. 1B is a perspective view illustrating an example of an optical element according to the embodiment. As illustrated in FIG. 1A, an illumination device 1 includes a light source 4, a reflector 4a, and an optical element 100. As illustrated in FIG. 1B, the optical element 100 includes a first liquid crystal cell 2_1, a second liquid crystal cell 2_2, a third liquid crystal cell 2_3, and a fourth liquid crystal cell 2_4. The light source 4 is configured with, for example, a light emitting diode (LED). The reflector 4a is a component that condenses light from the light source 4 to the optical element 100.

In FIG. 1B, a Dz direction indicates the emission direction of light from the light source 4 and the reflector 4a. The optical element 100 has a configuration in which the first liquid crystal cell 2_1, the second liquid crystal cell 2_2, the third liquid crystal cell 2_3, and the fourth liquid crystal cell 2_4 are stacked in the Dz direction. In the present disclosure, the optical element 100 has a configuration in which the first liquid crystal cell 2_1, the second liquid crystal cell 2_2, the third liquid crystal cell 2_3, and the fourth liquid crystal cell 2_4 are sequentially stacked from the light source 4 side (lower side in FIG. 1B). In FIG. 1B, one direction in a plane orthogonal to the Dz direction and parallel to stacking surfaces of the first liquid crystal cell 2_1, the second liquid crystal cell 2_2, the third liquid crystal cell 2_3, and the fourth liquid crystal cell 2_4 is defined as a Dx direction (first direction), and a direction orthogonal to both the Dx direction and the Dz direction is defined as a Dy direction (second direction).

The first liquid crystal cell 2_1, the second liquid crystal cell 2_2, the third liquid crystal cell 2_3, and the fourth liquid crystal cell 2_4 have the same configuration. In the present disclosure, the first liquid crystal cell 2_1 and the fourth liquid crystal cell 2_4 are liquid crystal cells for p-wave polarization. The second liquid crystal cell 2_2 and the third liquid crystal cell 2_3 are liquid crystal cells for s-wave polarization. Hereinafter, the first liquid crystal cell 2_1, the second liquid crystal cell 2_2, the third liquid crystal cell 2_3, and the fourth liquid crystal cell 2_4 are also collectively referred to as "liquid crystal cells 2".

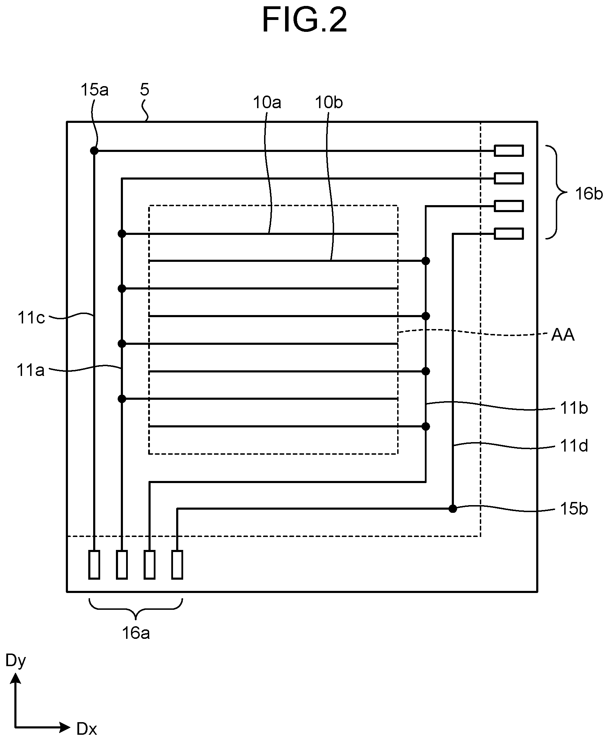

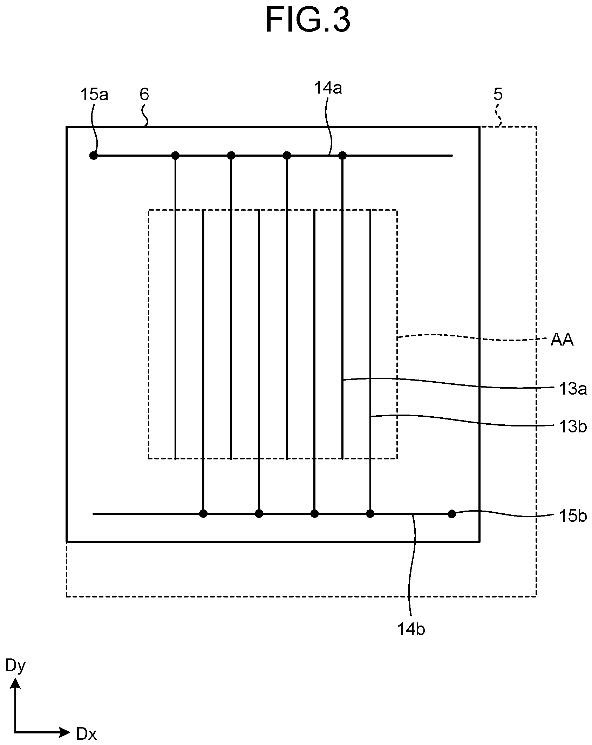

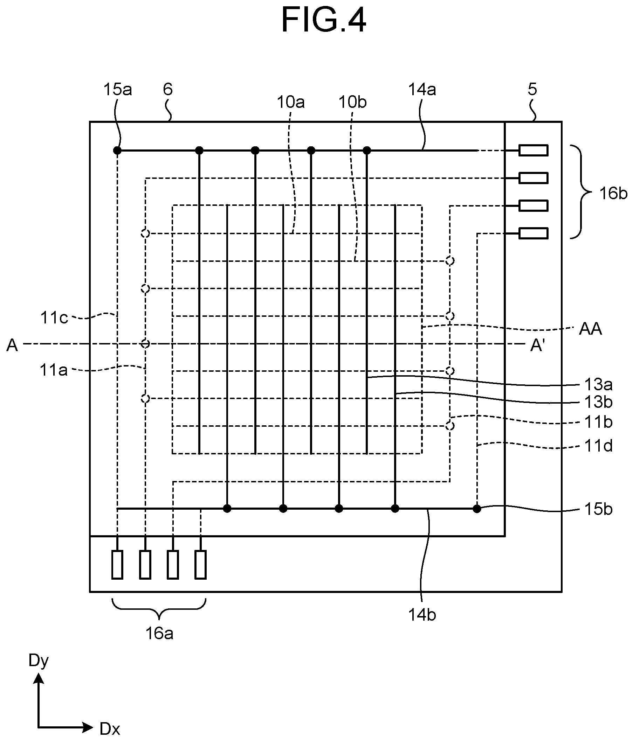

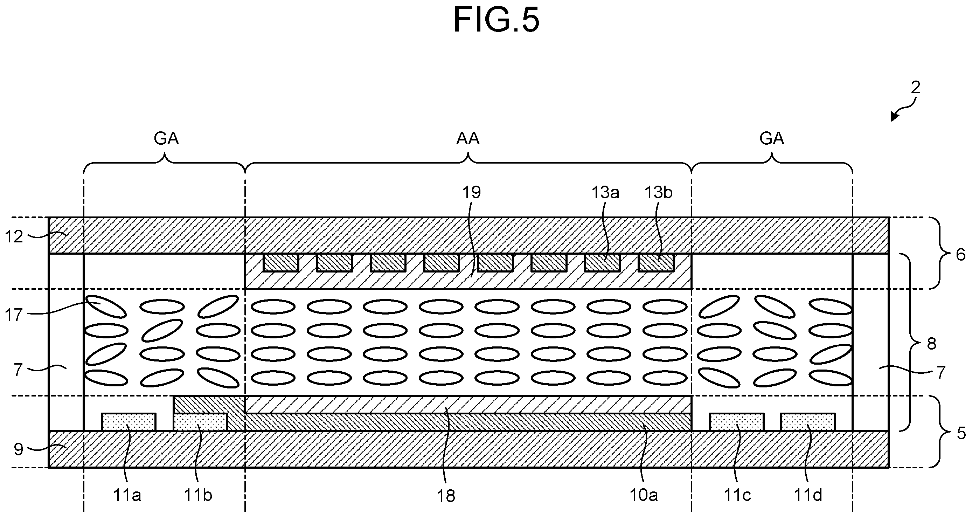

Each liquid crystal cell 2 includes a first substrate 5 and a second substrate 6. FIG. 2 is a schematic plan view of the first substrate when viewed in the Dz direction. FIG. 3 is a schematic plan view of the second substrate when viewed in the Dz direction. In FIG. 3, drive electrodes are visible through the substrates, but for clarity, the drive electrodes and wiring lines are illustrated with solid lines. FIG. 4 is a see-through diagram of a liquid crystal cell in which the first substrate and the second substrate are stacked in the Dz direction. In FIG. 4 as well, for clarity, drive electrodes and wiring lines on the second substrate side are illustrated with solid lines, and drive electrodes and wiring lines on the first substrate side are illustrated with dotted lines. FIG. 5 is a sectional view along line A-A' illustrated in FIG. 4. FIGS. 2, 3, 4, and 5 exemplarily illustrate the third liquid crystal cell 2_3 and the fourth liquid crystal cell 2_4 in which drive electrodes 10a and 10b of the first substrate 5 extend in the Dx direction and drive electrodes 13a and 13b of the second substrate 6 extend in the Dy direction.

As illustrated in FIG. 5, the liquid crystal cell 2 includes a liquid crystal layer 8 sealed around its periphery by a sealing member 7 between the first substrate 5 and the second substrate 6.

The liquid crystal layer 8 modulates light passing through the liquid crystal layer 8 in accordance with the state of electric field. As liquid crystal molecules, positive-type nematic liquid crystals are used, but other liquid crystals with the same effects may be used.

As illustrated in FIG. 2, the drive electrodes 10a and 10b, metal lines 11a and 11b, and metal lines 11c and 11d are provided on the liquid crystal layer 8 side of a base member 9 of the first substrate 5. The metal lines 11a and 11b supply drive voltage that is applied to the drive electrodes 10a and 10b, and the metal lines 11c and 11d supply drive voltage that is applied to the drive electrodes 13a and 13b (refer to FIG. 3) provided on the second substrate 6 to be described later. The metal lines 11a, 11b, 11c, and 11d are provided in a wiring layer of the first substrate 5. The metal lines 11a, 11b, 11c, and 11d are provided at intervals in the wiring layer on the first substrate 5. Hereinafter, the drive electrodes 10a and 10b are simply referred to as "drive electrodes 10" in some cases. The metal lines 11a, 11b, 11c, and 11d are referred to as "first metal lines 11" in some cases. As illustrated in FIG. 2, in the third liquid crystal cell 2_3 and the fourth liquid crystal cell 2_4, the drive electrodes 10 on the first substrate 5 extend in the Dx direction. In the first liquid crystal cell 2_1 and the second liquid crystal cell 2_2, the drive electrodes 10 on the first substrate 5 extend in the Dy direction.

As illustrated in FIG. 3, the drive electrodes 13a and 13b and a plurality of metal lines 14a and 14b that supply drive voltage applied to these drive electrodes 13 are provided on the liquid crystal layer 8 side of a base member 12 of the second substrate 6 illustrated in FIG. 5. The metal lines 14a and 14b are provided in a wiring layer of the second substrate 6. The metal lines 14a and 14b are provided at intervals in the wiring layer on the second substrate 6. Hereinafter, the drive electrodes 13a and 13b are simply referred to as "drive electrodes 13" in some cases. The metal lines 14a and 14b are referred to as "second metals wire 14" in some cases. As illustrated in FIG. 3, in the third liquid crystal cell 2_3 and the fourth liquid crystal cell 2_4, the drive electrodes 13 on the second substrate 6 extend in the Dy direction. In the first liquid crystal cell 2_1 and the second liquid crystal cell 2_2, the drive electrodes 13 on the second substrate 6 extend in the Dx direction.

The drive electrodes 10 and 13 are translucent electrodes formed of a translucent conductive material (translucent conductive oxide) such as indium tin oxide (ITO). The first substrate 5 and the second substrate 6 are translucent substrates of glass, resin, or the like. The first metal lines 11 and the second metal lines 14 are formed of at least one metallic material among aluminum (Al), copper (Cu), silver (Ag), molybdenum (Mo), and alloy thereof. The first metal lines 11 and the second metal lines 14 may be each formed of one or more of these metallic materials as a multilayered body of a plurality of layers. The at least one metallic material among aluminum (Al), copper (Cu), silver (Ag), molybdenum (Mo), and alloy thereof has a resistance lower than that of translucent conductive oxide such as ITO.

The metal line 11c of the first substrate 5 and the metal line 14a of the second substrate 6 are coupled by a conduction part 15a made of, for example, conductive paste. The metal line 11d of the first substrate 5 and the metal line 14b of the second substrate 6 are coupled by a conduction part 15b made of, for example, conductive paste.

Coupling (flex-on-board) terminal parts 16a and 16b that are coupled to non-illustrated flexible printed circuits (FPC) are provided in regions on the first substrate 5, which do not overlap the second substrate 6 when viewed in the Dz direction. The coupling terminal parts 16a and 16b each include four coupling terminals corresponding to the metal lines 11a, 11b, 11c, and 11d, respectively.

The coupling terminal parts 16a and 16b are provided in the wiring layer of the first substrate 5. Drive voltage to be applied to the drive electrodes 10a and 10b on the first substrate 5 and the drive electrodes 13a and 13b on the second substrate 6 is supplied to the liquid crystal cell 2 from an FPC coupled to the coupling terminal part 16a or the coupling terminal part 16b. Hereinafter, the coupling terminal parts 16a and 16b are simply referred to as "coupling terminal parts 16" in some cases.

As illustrated in FIG. 4, in the liquid crystal cell 2, the first substrate 5 and the second substrate 6 are stacked in the Dz direction (irradiation direction of light), and the drive electrodes 10 on the first substrate 5 intersect the drive electrodes 13 on the second substrate 6 when viewed in the Dz direction. In the liquid crystal cell 2 thus configured, the alignment direction of liquid crystal molecules 17 in the liquid crystal layer 8 can be controlled by supplying drive voltage to the drive electrodes 10 on the first substrate 5 and the drive electrodes 13 on the second substrate 6. A region in which the alignment direction of the liquid crystal molecules 17 in the liquid crystal layer 8 can be controlled is referred to as an "effective region AA". The refractive index distribution of the liquid crystal layer 8 is changed in the effective region AA, whereby the diffusion degree of light transmitted through the effective region AA of the liquid crystal cell 2 can be controlled. A region outside the effective region AA, where the liquid crystal layer 8 is sealed by the sealing member 7 is referred to as a "peripheral region GA" (refer to FIG. 5).

As illustrated in FIG. 5, the drive electrodes 10 (in FIG. 5, the drive electrode 10a) in the effective region AA of the first substrate 5 are covered by an alignment film 18. The drive electrodes 13 (in FIG. 5, the drive electrodes 13a and 13b) in the effective region AA of the second substrate 6 are covered by an alignment film 19. The alignment direction of the liquid crystal molecules is different between the alignment film 18 and the alignment film 19.

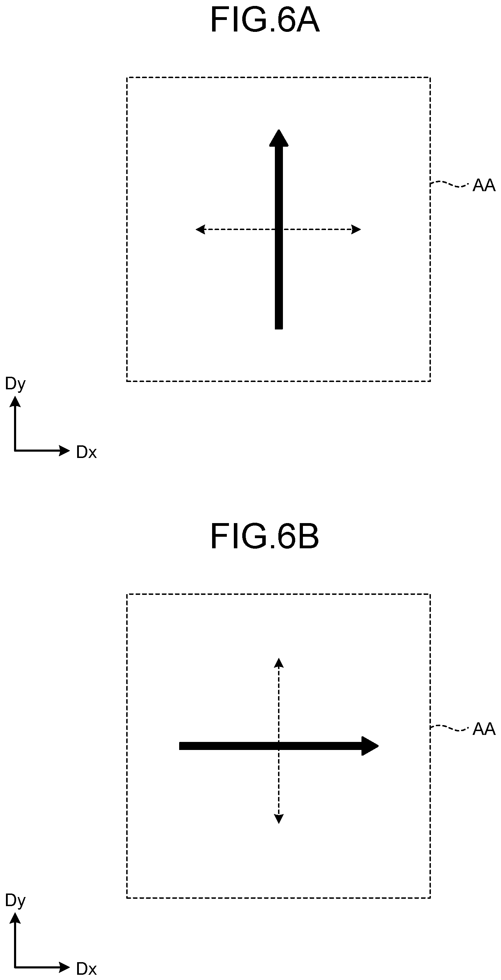

FIG. 6A is a diagram illustrating the alignment direction of the alignment film of the first substrate. FIG. 6B is a diagram illustrating the alignment direction of the alignment film of the second substrate.

As illustrated in FIGS. 6A and 6B, the alignment direction of the alignment film 18 of the first substrate 5 and the alignment direction of the alignment film 19 of the second substrate 6 are directions intersecting each other in plan view. Specifically, as illustrated with a solid arrow in FIG. 6A, the alignment direction of the alignment film 18 of the first substrate 5 is orthogonal to the extending direction of the drive electrodes 10a and 10b, which is illustrated with a dashed arrow in FIG. 6A. As illustrated with a solid arrow in FIG. 6B, the alignment direction of the alignment film 19 of the second substrate 6 is orthogonal to the extending direction of the drive electrodes 13a and 13b, which is illustrated with a dashed arrow in FIG. 6B. In the following description, the extending directions of the drive electrodes 10 and 13 are orthogonal to the alignment directions of the alignment films 18 and 19 covering them, but these may intersect at an angle other than orthogonal, for example, in the angle range of 85° to 90°. The drive electrodes 10 on the first substrate 5 side and the drive electrodes 13 on the second substrate 6 side are preferably orthogonal to each other but may intersect, for example, in the angle range of 85° to 90°. The alignment directions of the alignment films 18 and 19 are formed by rubbing processing or light alignment processing.

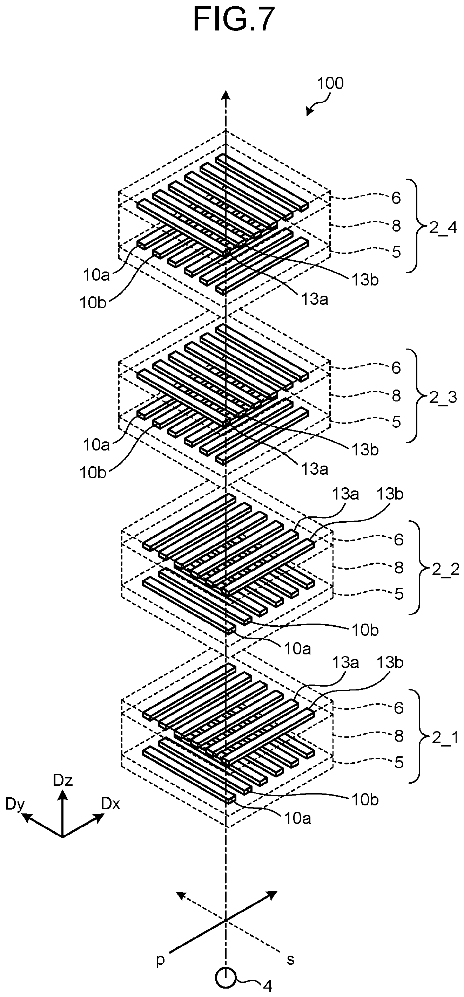

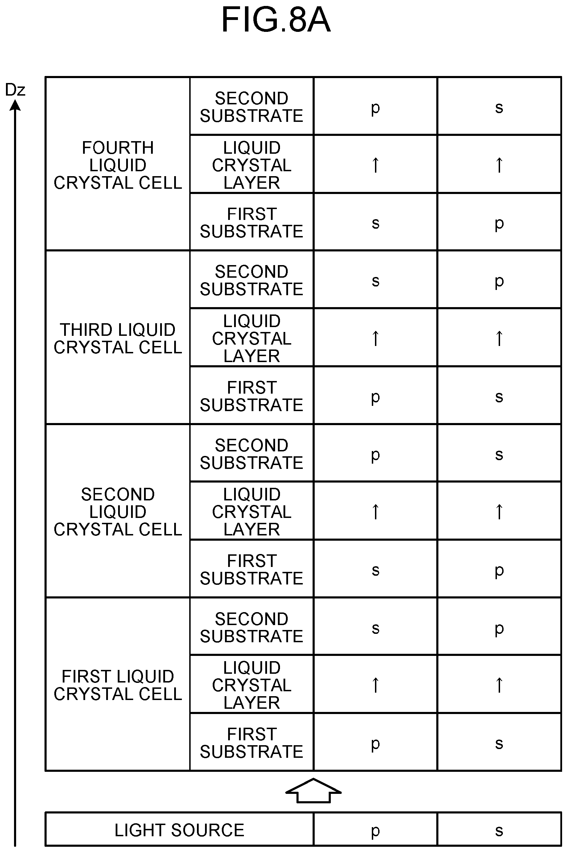

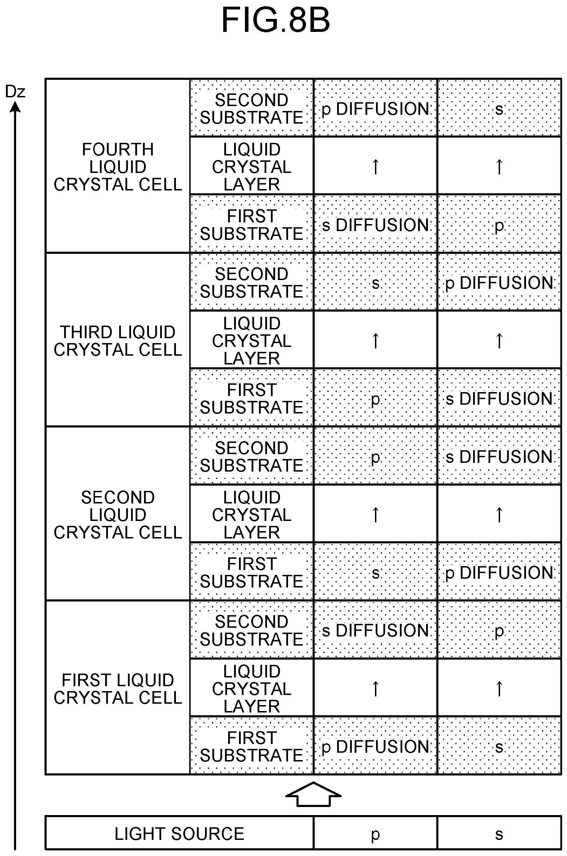

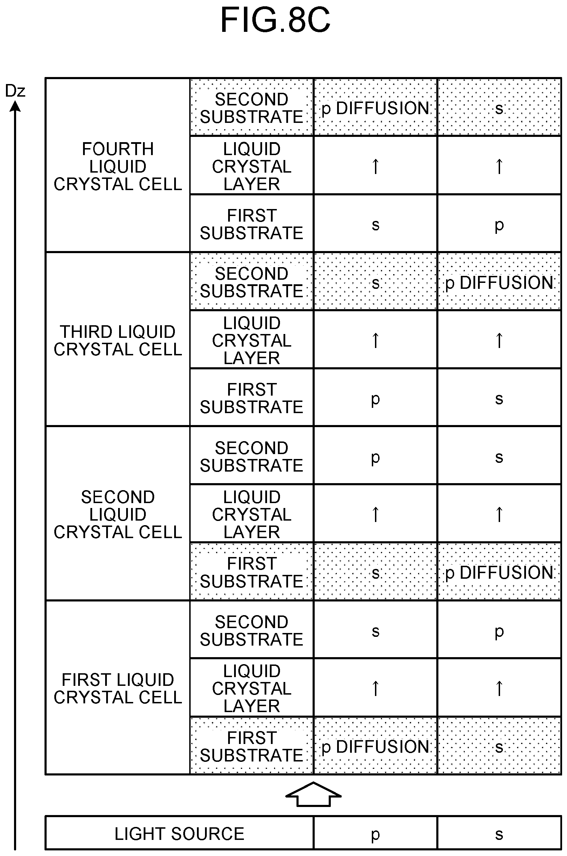

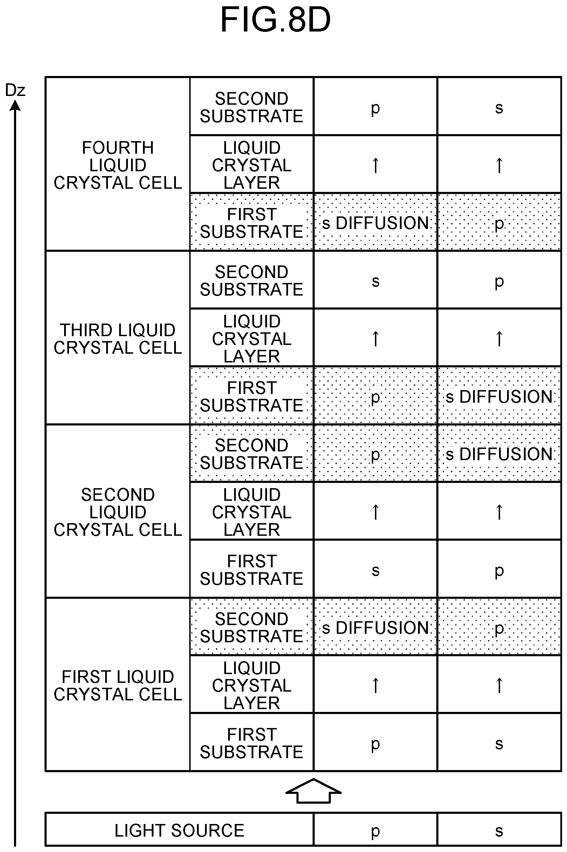

A mechanism for changing the shape of light by using the liquid crystal cells 2 (the first liquid crystal cell 2_1, the second liquid crystal cell 2_2, the third liquid crystal cell 2_3, and the fourth liquid crystal cell 2_4) will be described below. FIG. 7 is a multilayered structure diagram of the optical element according to the embodiment. FIGS. 8A, 8B, 8C, and 8D are conceptual diagrams for description of change in shape of light by the optical element according to the embodiment. FIGS. 8A, 8B, 8C, and 8D illustrate examples in which potential difference is generated between the drive electrodes of hatched substrates of the liquid crystal cells 2.

As illustrated in FIG. 7, the optical element 100 is provided on the optical axis of the light source 4, which is illustrated with a dashed and single-dotted line, and as described above, the first liquid crystal cell 2_1, the second liquid crystal cell 2_2, the third liquid crystal cell 2_3, and the fourth liquid crystal cell 2_4 are sequentially stacked from the light source 4 side (lower side in FIG. 7). The third liquid crystal cell 2_3 and the fourth liquid crystal cell 2_4 are stacked in a state of being rotated by 90° relative to the first liquid crystal cell 2_1 and the second liquid crystal cell 2_2.

In each liquid crystal cell 2, the alignment direction of the alignment film on the first substrate 5 side and the alignment direction of the alignment film on the second substrate 6 side intersect each other as illustrated in FIGS. 6A and 6B. Accordingly, from the first substrate 5 side toward the second substrate 6 side, the orientation of the liquid crystal molecules in the liquid crystal layer 8 gradually changes from the Dx direction to the Dy direction (or from the Dy direction to the Dx direction), and the polarized light component of transmitted light rotates along with the change. Specifically, in the liquid crystal cell 2, the polarized light component, which is a p-polarized component on the first substrate 5 side, changes to an s-polarized light component as distance from the second substrate 6 decreases; and the polarized light component, which is an s-polarized light component on the first substrate 5 side, changes to a p-polarized component as distance from the second substrate 6 decreases. This rotation of the polarized light component may be referred to as optical rotation.

FIG. 8A illustrates a state in which no potential is generated between adjacent electrodes in each liquid crystal cell 2. In this case, only optical rotation occurs in each liquid crystal cell 2 and no polarized light component is diffused.

As illustrated in FIG. 8B, for example, when potential difference is generated between the drive electrodes 10a and 10b on the first substrate 5 in the first liquid crystal cell 2_1, the liquid crystal molecules between the electrodes are aligned in a circular arc shape, and thus, refractive index distribution is formed in the Dx direction in the liquid crystal layer 8. As light from the light source 4 is transmitted in this state, the above-described refractive index distribution acts on the polarized light component (in FIG. 8B, p-polarized component) parallel to the Dx direction, and therefore, the p-polarized component diffuses in the Dx direction.

When potential difference is generated between the drive electrodes 13a and 13b on the second substrate 6 in the first liquid crystal cell 2_1, refractive index distribution is formed in the Dy direction on the second substrate 6 side, and thus, the s-polarized light component diffuses in the Dy direction on the second substrate 6 side. Specifically, the polarized light component having changed from a p-polarized component to an s-polarized light component during passing through the liquid crystal layer 8 in the first liquid crystal cell 2_1 diffuses in the Dy direction as well. However, the s-polarized light component at incidence on the first liquid crystal cell 2_1 optically rotates during passing through the liquid crystal layer 8 but intersects each refractive index distribution, and therefore, only optically rotates without diffusing and passes through the first liquid crystal cell 2_1.

The s-polarized light component at incidence on the first liquid crystal cell 2_1 changes to a p-polarized component after passing through the first liquid crystal cell 2_1, and the second liquid crystal cell 2_2 acts on this p-polarized component. Specifically, as illustrated in FIGS. 8A and 8B, the first liquid crystal cell 2_1 acts on the p-polarized component of light incident on the optical element 100, and the second liquid crystal cell 2_2 acts on the s-polarized light component thereof. Since the third liquid crystal cell 2_3 and the fourth liquid crystal cell 2_4 are provided with rotation by 90° relative to the first liquid crystal cell 2_1 and the second liquid crystal cell 2_2, polarized light components on which they act are switched by 90°. Specifically, the third liquid crystal cell 2_3 acts on the s-polarized light component at incidence on the optical element 100, and the fourth liquid crystal cell 2_4 acts on the p-polarized component at incidence on the optical element 100.

As illustrated in FIG. 8C, in the optical element, it is possible to act on the p-polarized component by providing potential difference between drive electrodes extending in the Dy direction in each liquid crystal cell 2 (between the drive electrodes 10a and 10b of the first substrate 5 in the first liquid crystal cell 2_1 and the second liquid crystal cell 2_2 and between the drive electrodes 13a and 13b of the second substrate 6 in the third liquid crystal cell 2_3 and the fourth liquid crystal cell 2_4), thereby increasing the shape of light mainly in the Dx direction. This effect may be referred to as horizontal diffusion.

As illustrated in FIG. 8D, it is possible to act on the s-polarized light component by providing potential difference between drive electrodes extending in the Dx direction in each liquid crystal cell 2 (between the drive electrodes 13a and 13b of the second substrate 6 in the first liquid crystal cell 2_1 and the second liquid crystal cell 2_2 and between the drive electrodes 10a and 10b of the first substrate 5 in the third liquid crystal cell 2_3 and the fourth liquid crystal cell 2_4), thereby increasing the shape of light mainly in the Dy direction. This effect may be referred to as vertical diffusion.

The diffusion degree of light in each direction depends on the potential difference between the drive electrodes 10a and 10b (or between the drive electrodes 13a and 13b) adjacent to each other. The spread of light in the direction is maximum (100 [%]) in a case where the potential difference between the drive electrodes 10a and 10b (or between the drive electrodes 13a and 13b) is maximum potential difference (for example, 30 [V]) defined in advance, and no spread of light (0 [%]) occurs in the direction in a case where no potential difference is generated. Alternatively, the spread of light in the direction is 50 [%] in a case where the potential difference between the drive electrodes 10a and 10b (or between the drive electrodes 13a and 13b) is 50 [%] (for example, 15 [V]) of the above-described maximum potential difference. In a case where the relation between voltage difference and light spread is not linear, it is possible to set another potential difference instead of 15 [V].

In each liquid crystal cell 2, the interval (is also referred to as a cell gap) between its substrates (between the first substrate 5 and the second substrate 6) is large and is 30 $\mu$m to 50 $\mu$m approximately, and thus, influence of an electric field formed in one of the substrates on the other substrate side is reduced as much as possible. Drive voltage that generates potential difference between the drive electrodes 10a and 10b (or between the drive electrodes 13a and 13b) adjacent to each other is what is called an alternating-current square wave, thereby preventing burn-in of the liquid crystal molecules.

The alignment directions of the alignment films, the extending directions of the drive electrodes on the substrates, and the angle between them may be modified as appropriate for the entire optical element 100 or each liquid crystal cell 2 in accordance with the characteristics of liquid crystals to be employed and optical characteristics to be intentionally obtained.

In the present embodiment, description is made on the configuration of the optical element 100 in which the four liquid crystal cells of the first liquid crystal cell 2_1, the second liquid crystal cell 2_2, the third liquid crystal cell 2_3, and the fourth liquid crystal cell 2_4 are stacked, but the optical element 100 is not limited to this configuration and may employ, for example, a configuration in which two or three liquid crystal cells 2 are stacked or a configuration in which a plurality of liquid crystal cells 2, five or more liquid crystal cells 2, are stacked.

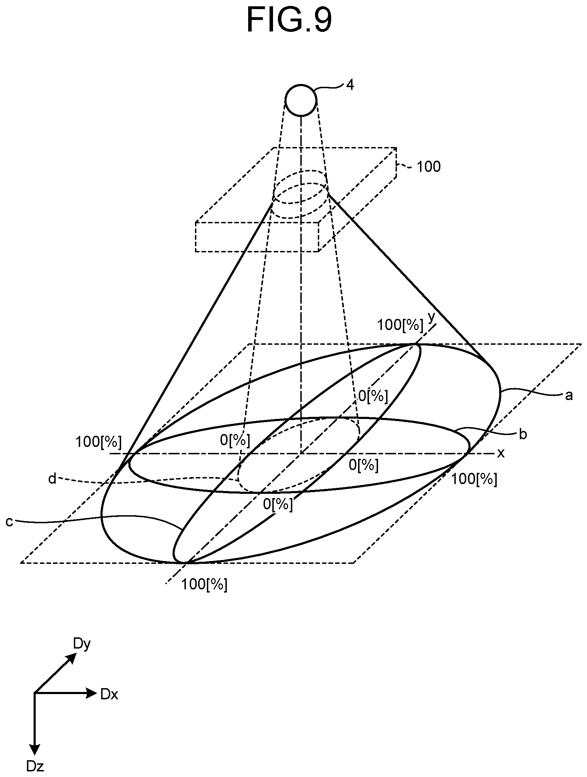

In the present disclosure, in the illumination device 1 with the above-described configuration, light incident on the optical element from the light source 4 is controlled in the two directions of the Dx direction (direction of horizontal diffusion) and the Dy direction (direction of vertical diffusion) by controlling drive voltage of each liquid crystal cell 2. The above-described vertical diffusion and horizontal diffusion may be collectively referred to as light diffusion. Accordingly, the shape of light emitted from the optical element is changed. The shape of light is a light shape that appears on a plane parallel to an emission surface of the optical element, and this may be referred to as a light distribution shape. The following describes control of the light diffusion degree in the present disclosure with reference to FIG. 9.

FIG. 9 is a conceptual diagram for conceptually describing control of the light diffusion degree of the illumination device according to the embodiment. FIG. 9 illustrates an irradiation area of light on an imaginary plane xy orthogonal to the Dz direction. The outline of the actual irradiation area is slightly unclear depending on the distance from the light source 4, a light diffraction phenomenon, and the like.

As described above, the drive voltage is supplied to the drive electrodes 10 and 13 of each liquid crystal cell 2 of the optical element 100 provided on the optical axis of the light source 4, whereby the alignment direction of the liquid crystal molecules 17 in the liquid crystal layer 8 is controlled. With this control, the light distribution shape of light emitted from the optical element 100 is controlled.

Specifically, for example, the light distribution shape in the Dx direction changes in accordance with the drive voltage applied to the drive electrodes 10 or drive electrodes 13 extending in the Dy direction in each liquid crystal cell 2 as described above. Such light diffusion in the Dx direction may be referred to as the horizontal diffusion. The light distribution shape in the Dy direction changes in accordance with the drive voltage applied to the drive electrodes 10 or drive electrodes 13 extending in the Dx direction in the first to fourth liquid crystal cells. Such light diffusion in the Dy direction may be referred to as the vertical diffusion.

In the present disclosure, the minimum diffusion degrees of the horizontal diffusion and the vertical diffusion are 0 [%] and the maximum diffusion degrees thereof are 100 [%]. More specifically, in a case where the horizontal diffusion degree is 0 [%], drive electrodes (for example, the drive electrodes 10 extending in the Dy direction on the first substrate 5 in the first liquid crystal cell 2_1) functioning to expand the light distribution state in the Dx direction do not act on the refractive index distribution of the liquid crystal layer 8. In this case, no potential difference is present between the adjacent drive electrodes 10a and 10b or no potential is supplied to the electrodes. On the other hand, in a case where the horizontal diffusion degree is 100 [%], drive electrodes (for example, the drive electrodes 10 extending in the Dy direction on the first substrate 5 in the first liquid crystal cell 2_1) functioning to expand the light distribution state in the Dx direction maximumly act on the refractive index distribution of the liquid crystal layer 8. In this case, the potential difference between the adjacent drive electrodes 10a and 10b is set to the maximum potential difference (for example, 30 [V]) in the optical element 100. In a case where the horizontal diffusion degree is larger than 0 [%] and smaller than 100 [%], potential adjusted such that the potential difference between the adjacent drive electrodes 10a and 10b is larger than 0 [V] and smaller than the maximum potential difference (for example, 30 [V]) is applied to the electrodes. The same applies to the vertical diffusion.

Outline "a" illustrated in FIG. 9 exemplarily indicates the irradiation area in a case where the horizontal diffusion degree and the vertical diffusion degree are both 100 [%]. Outline "b" illustrated in FIG. 9 exemplarily indicates the irradiation area in a case where the horizontal diffusion degree is 100 [%] and the vertical diffusion degree is 0 [%]. Outline "c" illustrated in FIG. 9 exemplarily indicates the irradiation area in a case where the horizontal diffusion degree is 0 [%] and the vertical diffusion degree is 100 [%]. Outline "d" illustrated in FIG. 9 exemplarily indicates the irradiation area in a case where the horizontal diffusion degree and the vertical diffusion degree are both 0 [%]. In other words, outline "d" indicates the light distribution state when light from the light source 4 is emitted without being controlled by the optical element 100 (in other words, simply transmitted through the optical element 100).

In this manner, in the illumination device 1 with the above-described configuration, it is possible to control the horizontal and vertical diffusion degrees of emission light from the optical element 100 by performing drive voltage control of each liquid crystal cell 2. Thus, it is possible to change the light distribution shape of emission light from the illumination device 1.

(First embodiment)

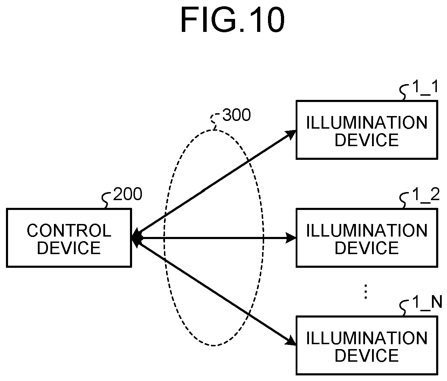

FIG. 10 is a schematic view illustrating an example of the configuration of an illumination system according to a first embodiment. The illumination system according to the first embodiment includes a plurality of illumination devices 1_1, 1_2, ..., and 1_N and a control device 200. The control device 200 is, for example, a portable communication terminal device such as a smartphone or a tablet. The illumination devices 1_1, 1_2, ..., and 1_N are each registered in the control device 200 in advance as a control target device having a light diffusion degree controllable by the control device 200.

Data and various command signals are transmitted bidirectionally between the control device 200 and each of the illumination devices 1_1, 1_2, ..., and 1_N through a communication means 300. In the present disclosure, the communication means 300 is a wireless communication means of, for example, Bluetooth (registered trademark) or WiFi (registered trademark). Wireless communication may be performed between the control device 200 and each of the illumination devices 1_1, 1_2, ..., and 1_N through, for example, a predetermined network such as a mobile communication network. Alternatively, each of the illumination devices 1_1, 1_2, ..., and 1_N and the control device 200 may be coupled in a wired manner to perform wired communication therebetween.

As illustrated in FIG. 10, N (N is a natural number equal to or larger than one) illumination devices 1_n (n is a natural number of 1 to N) are control target devices of the control device 200 in the present disclosure, but the present disclosure is not limited by the number of control target devices (illumination devices 1_n) of the control device 200. Furthermore, in the present disclosure, an aspect in which the light diffusion degree of each illumination device 1_n is controlled as a setting parameter of a control target device (illumination device 1_n) will be described below, but the setting parameter is not limited to the light diffusion degree. Examples of setting parameters of a control target device (illumination device 1_n) may include the light quantity and color temperature of the illumination device 1_n.

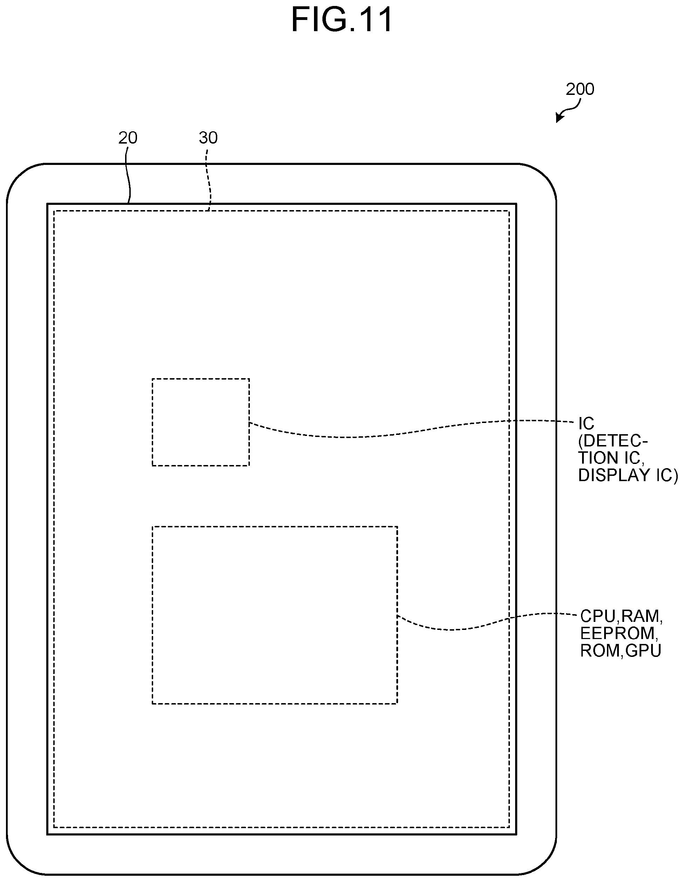

FIG. 11 is an exterior diagram illustrating an example of the control device according to the first embodiment. The control device 200 is a display device (touch screen) with a touch detection function in which a display panel 20 and a touch sensor 30 are integrated. The control device 200 includes, as internal constituent components, for example, various ICs such as a detection IC and a display IC, and a central processing unit (CPU), a random access memory (RAM), an electrically erasable programmable read only memory (EEPROM), a read only memory (ROM), and a graphics processing unit (GPU) of a smartphone, a tablet, or the like constituting the control device 200.

The display panel 20 is what is called an in-cell or hybrid device in which the touch sensor 30 is built and integrated. Building and integrating the touch sensor 30 in the display panel 20 includes, for example, sharing some members such as substrates and electrodes used as the display panel 20 and some members such as substrates and electrodes used as the touch sensor 30. The display panel 20 may be what is called an on-cell type device in which the touch sensor 30 is mounted on a display device.

The display panel 20 is, for example, a liquid crystal display panel including a liquid crystal display element. The display panel 20 is not limited thereto but may be, for example, an organic EL display panel (organic light emitting diode (OLED)) or an inorganic EL display panel (micro LED or mini LED).

The touch sensor 30 is, for example, a capacitive touch sensor. The touch sensor 30 is not limited thereto but may be, for example, a touch sensor of a resistance film scheme or a touch sensor of an ultrasonic wave scheme or an optical scheme.

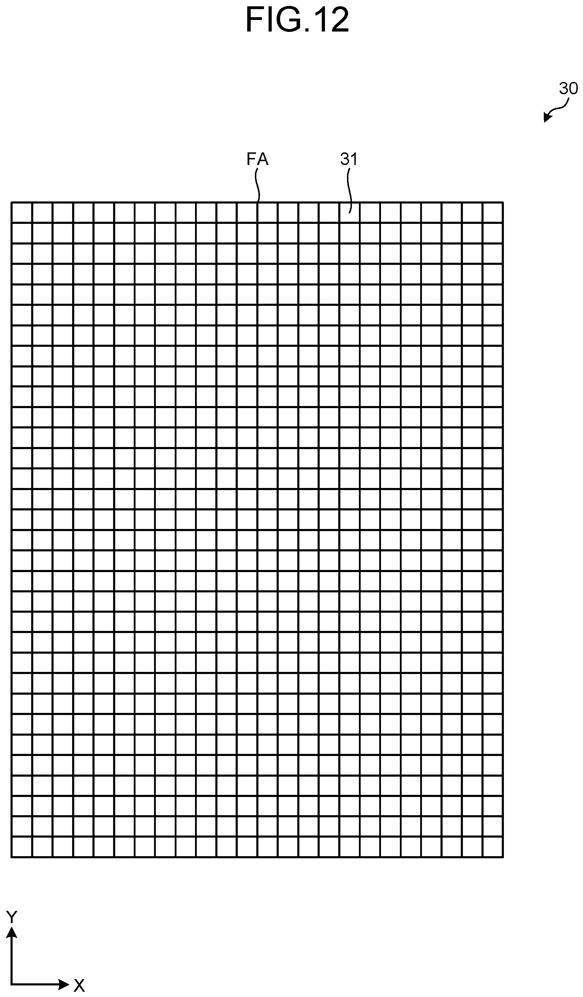

FIG. 12 is a conceptual diagram illustrating an example of a touch detection region of the touch sensor. A plurality of detection elements 31 are provided in a detection region FA of the touch sensor 30. The detection elements 31 in the detection region FA of the touch sensor 30 are arranged in an X direction and a Y direction orthogonal to the X direction and provided in a matrix of a row-column configuration. In other words, the touch sensor 30 has the detection region FA overlapping the detection elements 31 arranged in the X direction and the Y direction.

Specific configurations and operation for controlling the light diffusion degree of the illumination device 1 in the above-described configuration of the illumination system according to the first embodiment will be described below.

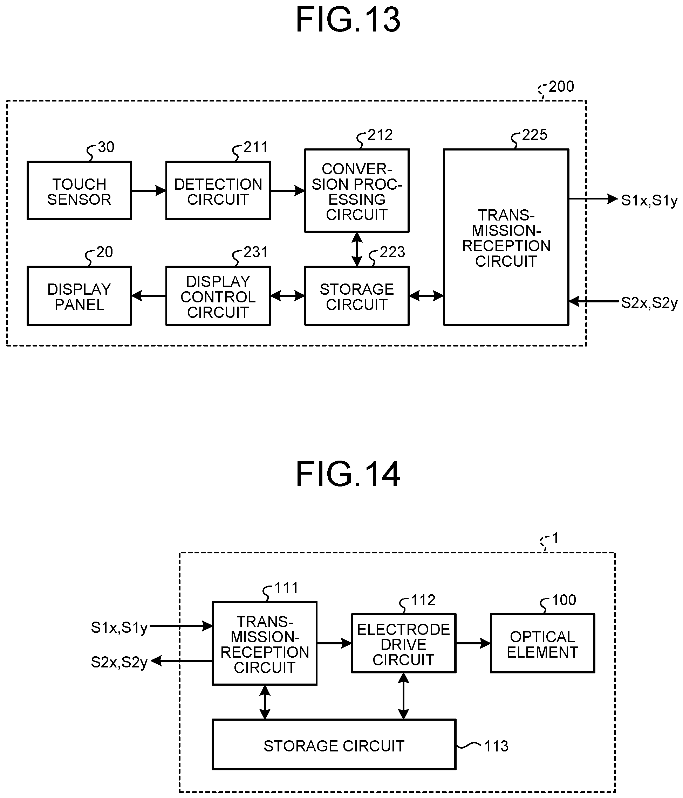

FIG. 13 is a diagram illustrating an example of the control block configuration of the control device according to a first embodiment. The following describes a control block configuration for executing setting change processing to be described later.

As illustrated in FIG. 13, the control device 200 according to the first embodiment includes the display panel 20, the touch sensor 30, a detection circuit 211, a conversion processing circuit 212, a storage circuit (first storage circuit) 223, a transmission-reception circuit 225, and a display control circuit 231. The detection circuit 211 is configured with, for example, a detection IC. Alternatively, the detection circuit 211 and the display control circuit 231 may be mounted as one display IC on the display panel 20 or on an FPC coupled to the display panel 20. The conversion processing circuit 212 and the storage circuit 223 are each configured with, for example, the CPU, RAM, EEPROM, and ROM of the smartphone or tablet constituting the control device 200. The display control circuit 231 may be a display IC mounted on the display panel 20 as described above, and moreover, may include, for example, the GPU of a smartphone, a tablet, or the like constituting the control device 200. The transmission-reception circuit 225 is configured with, for example, a wireless communication module of a smartphone, a tablet, or the like constituting the control device 200.

The detection circuit 211 is a circuit that detects existence of a touch on the touch sensor 30 based on a detection signal output from each detection element 31 of the touch sensor 30.

The conversion processing circuit 212 is a circuit that executes conversion processing of the position of touch detection by the detection circuit 211 into various setting values (in the present disclosure, light diffusion degrees) of the illumination device 1. In the present disclosure, the conversion processing circuit 212 has a function to execute conversion processing of the position of touch detection by the detection circuit 211, that is, a touched object (pictorial image) into operation states on various screens. The conversion processing circuit 212 is a component achieved by, for example, the CPU of a smartphone, a tablet, or the like constituting the control device 200.

The storage circuit 223 is configured with, for example, the RAM, EEPROM, and ROM of a smartphone, a tablet, or the like constituting the control device 200. In the present disclosure, the storage circuit 223 stores setting information including various setting values (in the present disclosure, light diffusion degrees) of the illumination device 1. The storage circuit 223 temporarily stores, for example, intermediate data in the setting change processing to be described later.

The transmission-reception circuit 225 transmits and receives setting information to and from the illumination device 1. Specifically, the transmission-reception circuit 225 transmits a Dx-directional light diffusion degree S1x and a Dy-directional light diffusion degree S1y, which are calculated in the setting change processing to be described later, to the illumination device 1 as first setting information. The transmission-reception circuit 225 receives second setting information (a Dx-directional light diffusion degree S2x and a Dy-directional light diffusion degree S2y) transmitted from the illumination device 1.

The display control circuit 231 executes display control processing for displaying a setting change screen to be described later on the display panel 20. The display control circuit 231 in the present disclosure performs display control of the display panel 20 based on various kinds of setting information stored in a storage region of the storage circuit 223 and position information of pictorial images.

FIG. 14 is a diagram illustrating an example of a control block configuration of the illumination device according to the first embodiment. As illustrated in FIG. 14, the illumination device 1 according to the first embodiment includes a transmission-reception circuit 111, an electrode drive circuit 112, and a storage circuit (second storage circuit) 113 as control blocks for controlling the optical element 100 described above.

The transmission-reception circuit 111 transmits and receives various kinds of setting information to and from the control device 200. Specifically, the transmission-reception circuit 111 receives the first setting information (the Dx-directional light diffusion degree S1x and the Dy-directional light diffusion degree S1y) transmitted from the control device 200. The transmission-reception circuit 111 transmits, to the control device 200, the Dx-directional light diffusion degree S2x and the Dy-directional light diffusion degree S2y stored in the storage circuit 113 as the second setting information.

In the present disclosure, upon activation of the illumination device 1, the transmission-reception circuit 111 transmits, to the control device 200, the Dx-directional light diffusion degree S2x and the Dy-directional light diffusion degree S2y stored in the storage circuit 113 as the second setting information. In addition, the transmission-reception circuit 111 stores, in the storage circuit 113 as the new Dx-directional light diffusion degree S2x and the new Dy-directional light diffusion degree S2y, the Dx-directional light diffusion degree S1x and the Dy-directional light diffusion degree S1y of the first setting information transmitted from the control device 200 by the setting change processing of the control device 200 to be described later. In other words, when the first setting information is transmitted from the control device 200 to the illumination device 1, the second setting information is updated to the first setting information. The illumination device 1 initially does not store the second setting information (0 [%] for the vertical diffusion and the horizontal diffusion). In this case, the first setting information is transmitted from the control device 200, whereby the second setting information is stored.

The electrode drive circuit 112 supplies drive voltage in accordance with the Dx-directional light diffusion degree S2x and the Dy-directional light diffusion degree S2y stored in the storage circuit 113 to the drive electrodes 10 and 13 of each liquid crystal cell 2 of the optical element 100.

Specifically, upon activation of the illumination device 1, the electrode drive circuit 112 supplies drive voltage corresponding to the second setting information stored in the storage circuit 113 to the drive electrodes 10 and 13 of each liquid crystal cell 2 of the optical element 100.

The electrode drive circuit 112 also supplies, to the drive electrodes 10 and 13 of each liquid crystal cell 2 of the optical element 100, drive voltage corresponding to the second setting information updated based on the first setting information transmitted from the control device 200.

The storage circuit 113 is composed of, for example, a RAM, an EEPROM, or a ROM. In the present disclosure, the storage circuit 113 stores the final value of the second setting information in a previous operation of the illumination device 1.

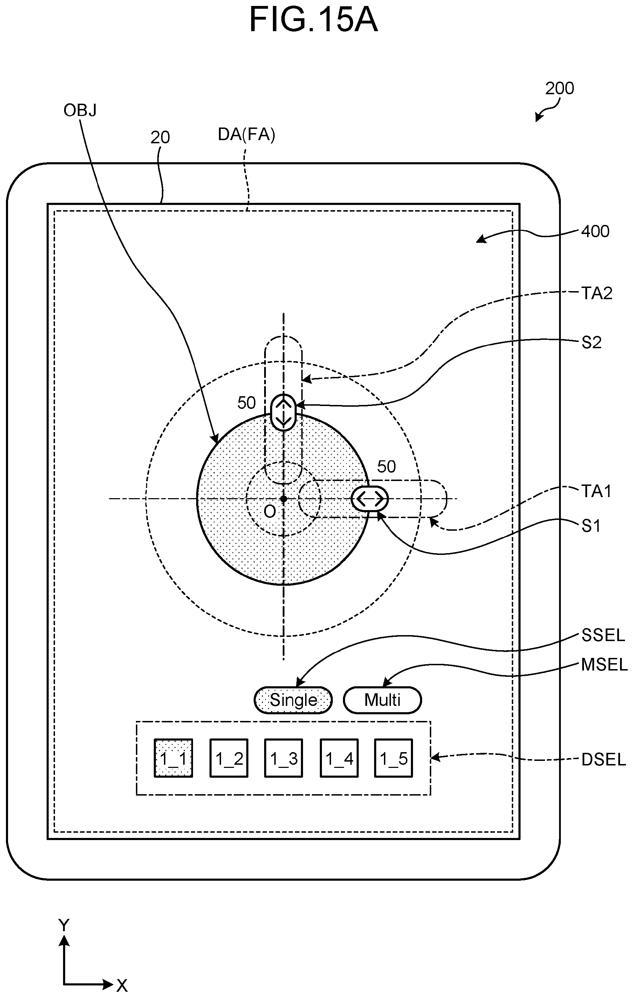

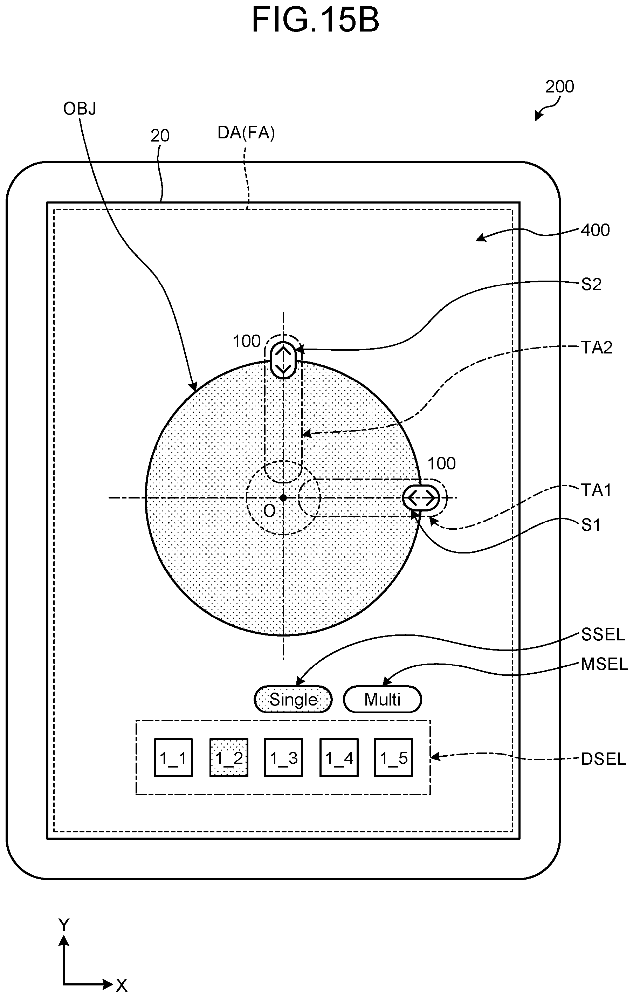

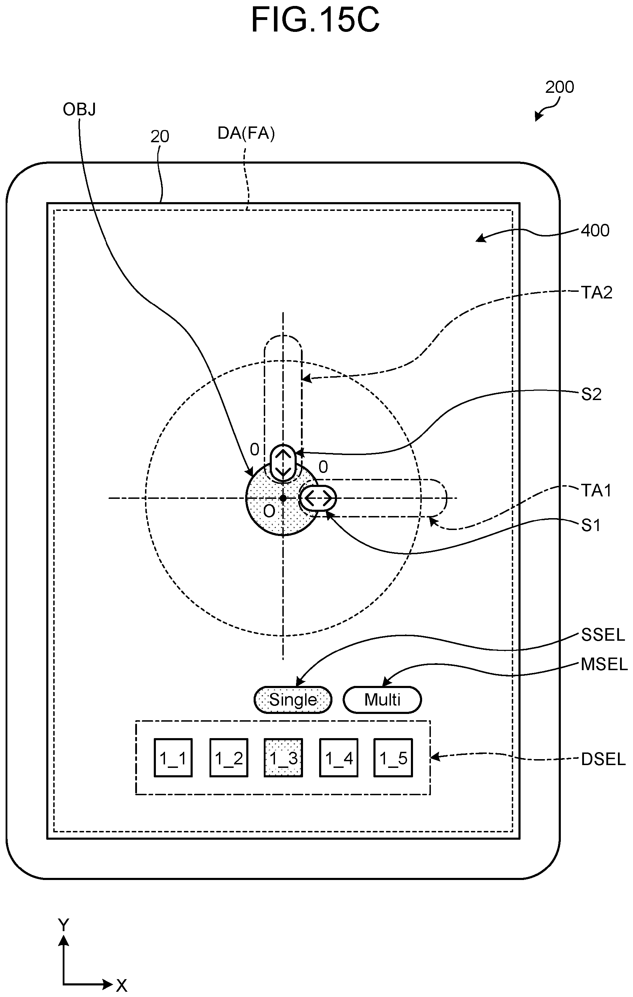

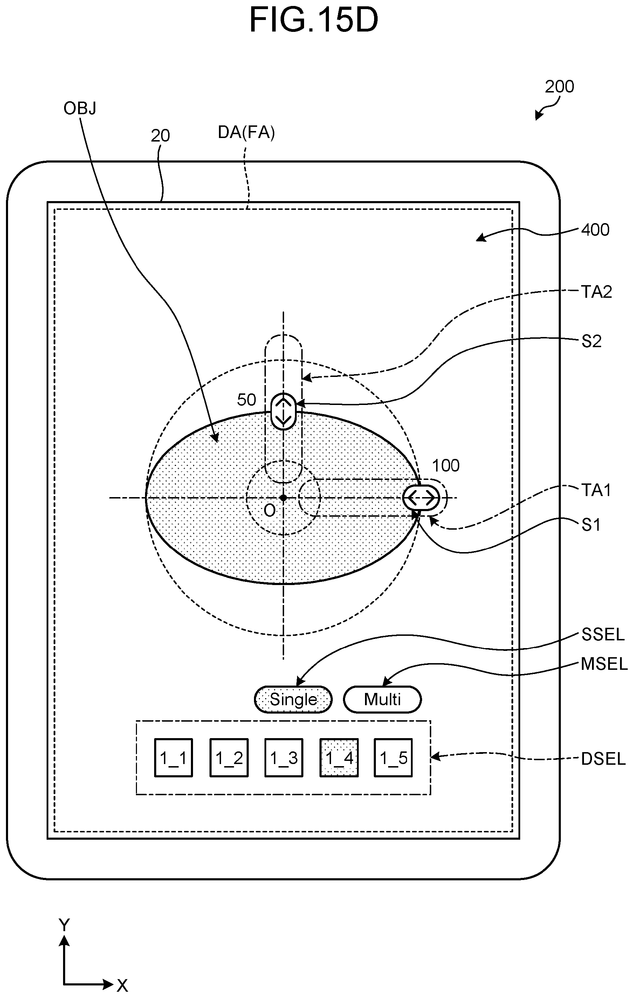

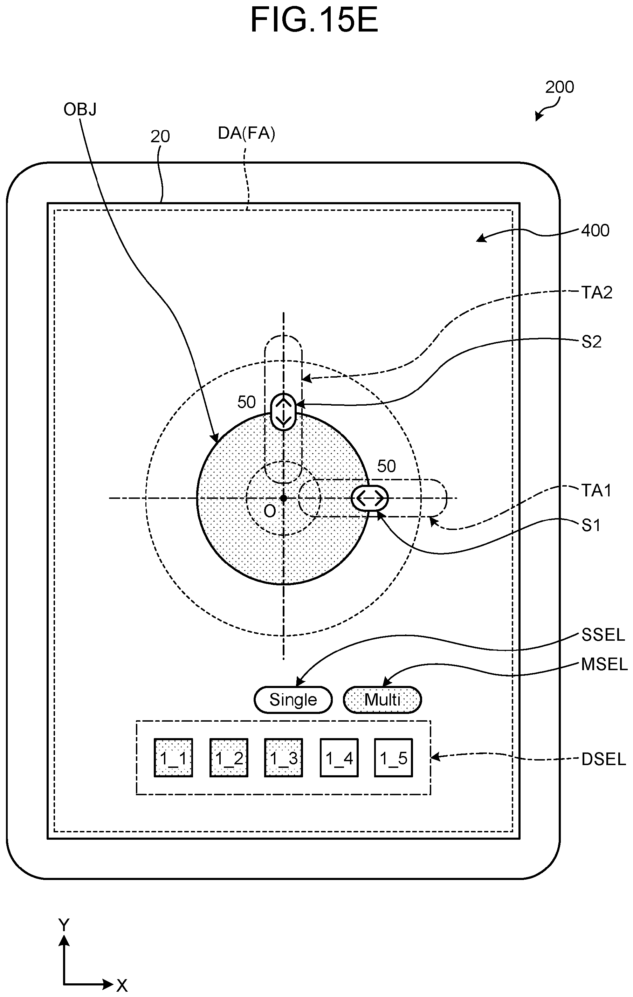

FIGS. 15A, 15B, 15C, 15D, and 15E are conceptual diagrams illustrating an example of the display aspect of the setting change screen on the control device according to the first embodiment. On a setting change screen 400 illustrated in FIGS. 15A, 15B, 15C, 15D, and 15E, the X direction is defined as the Dx direction (first direction) in light diffusion degree control of the illumination device 1, and the Y direction is defined as the Dy direction (second direction) in light diffusion degree control of the illumination device 1. An XY plane with an origin O(0, 0) at a predetermined position on a display region DA is defined on the setting change screen 400.

The display panel 20 is provided with the display region DA overlapping the detection region FA of the touch sensor 30 in plan view. In the example illustrated in FIGS. 15A, 15B, 15C, 15D, and 15E, a light distribution shape object OBJ with a central point at the origin O(0, 0) of the XY plane on the setting change screen 400 is displayed, and a first slider S1 and a second slider S2 for setting the light diffusion degree of the illumination device 1 are disposed on the outline of the light distribution shape object OBJ.

The light distribution shape object OBJ is a pictorial image on the setting change screen 400, corresponding to the light distribution state of light emitted from the illumination device 1.

The first slider S1 and the second slider S2 are, for example, pictorial images displayed on the setting change screen 400, which a user can touch and move (drag operation) with a finger.

The shape of the light distribution shape object OBJ can be changed by moving the first slider S1 in the X direction. Simultaneously, the light diffusion degree (horizontal diffusion degree) of the illumination device 1 in the Dx direction is controlled. The shape of the light distribution shape object OBJ can be changed by moving the second slider S2 in the Y direction. Simultaneously, the light diffusion degree (vertical diffusion degree) of the illumination device 1 in the Dy direction is controlled.

In the present disclosure, a selection switch SSEL for a single-device operation mode (first mode) and a selection switch MSEL for a multiple-device operation mode (second mode) are provided on the setting change screen 400. A plurality of device selection switches DSEL corresponding to the illumination devices 1_1, 1_2, 1_3, 1_4, and 1_5 registered as control target devices in advance are provided on the setting change screen 400.

Each device selection switch DSEL is a pictorial image displayed as a button on a setting display screen. One or some of the illumination devices 1 each serving as an operation target in device setting processing to be described later are selected by selecting one or some of the device selection switches DSEL. Each time a new illumination device 1 is registered, a device selection switch DSEL is individually provided for the illumination device **1.** When the registered illumination device 1 is deregistered, the device selection switch DSEL corresponding to the illumination device 1 is deleted from the setting display screen. Hereinafter, the illumination device 1 selected as an operation target through the corresponding device selection switch DSEL is also referred to as an "operation target device".

In the present disclosure, "select a switch" means that the user touches a pictorial image corresponding to the switch on the setting change screen 400 and display of the pictorial image changes (the shape, color, brightness, or the like of the pictorial image changes). In addition, "cancel selection of the switch" means that the user touches the pictorial image again and the pictorial image returns to the original state.

The selection switch SSEL is a pictorial image displayed as a button on the setting change screen 400. When the selection switch SSEL is selected and one pictorial image corresponding to an illumination device 1 to be an operation target is selected from among the pictorial images of the device selection switches DSEL, the selected illumination device 1 becomes controllable. Details will be described later.

The selection switch MSEL is a pictorial image displayed as a button on the setting change screen 400. When the selection switch MSEL is selected and one or more pictorial images corresponding to the illumination devices 1 to be operation targets are selected from among the pictorial images of the device selection switches DSEL, the selected illumination devices become controllable. Details will be described later.

Positions where the device selection switches DSEL, the selection switch SSEL, and the selection switch MSEL are provided are not limited to those in the aspect illustrated in FIGS. 15A, 15B, 15C, 15D, and 15E.

The single-device operation mode and the multiple-device operation mode will be described below. The single-device operation mode and the multiple-device operation mode are exclusively selected operation modes.

Specifically, for example, when the selection switch MSEL is touched in the single-device operation mode, the operation mode is switched to the multiple-device operation mode. For example, when the selection switch SSEL is touched in the multiple-device operation mode, the operation mode is switched to the single-device operation mode.

Behavior when the device selection switches DSEL are operated is different between the single-device operation mode and the multiple-device operation mode.

Specifically, in the single-device operation mode, for example, when the device selection switch DSEL corresponding to the illumination device 1_2 is selected while the illumination device 1_1 is selected, a target device to be subjected to single-device operation switches from the illumination device 1_1 to the illumination device 1_2. In other words, in the single-device operation mode, any one of the illumination devices 1_1, 1_2, 1_3, 1_4, and 1_5 registered as control target devices in advance is selected as an operation target device and allowed for single-device operation.

In the multiple-device operation mode, for example, when the device selection switch DSEL corresponding to the illumination device 1_2 is selected while the illumination device 1_1 is selected, two operation target devices of the illumination device 1_1 and the illumination device 1_2 are selected. Thereafter, when selection of the device selection switch DSEL corresponding to the illumination device 1_2 is canceled, the illumination device 1_2 is excluded from among the operation target devices and only one operation target device of the illumination device 1_1 is selected. Alternatively, when selection of the device selection switch DSEL corresponding to the illumination device 1_1 is canceled while two operation target devices of the illumination device 1_1 and the illumination device 1_2 are selected, the illumination device 1_1 is excluded from among the operation target devices and only one operation target device of the illumination device 1_2 is selected. In other words, in the multiple-device operation mode, when at least one of the illumination devices 1_1, 1_2, 1_3, 1_4, and 1_5 registered as control target devices in advance is selected as an operation target device, the operation target device is allowed to be operated singly. When a plurality of control target devices (for example, the illumination device 1_1 and the illumination device 1_2 selected) are selected as operation target devices, the selected operation target devices (for example, the illumination device 1_1 and the illumination device 1_2) are allowed to be operated simultaneously.

In the single-device operation mode, when the same setting information (in the present disclosure, light diffusion degree information) is to be transmitted to a plurality of illumination devices, it is needed to switch between operation target devices by selecting the corresponding device selection switches DSEL one by one and make the same setting change for each of the operation target devices (for example, the illumination device 1_1 and the illumination device 1_2).

However, in the multiple-device operation mode, the same setting change is applied to a plurality of selected operation target devices (for example, the illumination device 1_1 and the illumination device 1_2) at a time. This can reduce work required to transmit the same setting information to a plurality of illumination devices.

In the example illustrated in FIGS. 15A, 15B, 15C, 15D, and 15E, the five illumination devices 1_1, 1_2, 1_3, 1_4, and 1_5 are registered as control target devices of the control device 200, but the number of control target devices of the control device 200 is not limited to five. In the following description, the number of control target devices (illumination devices 1) of the control device 200 is N (N is a natural number equal to or larger than one) in some cases. The number of operation target devices (illumination devices 1) selected in the multiple-device operation mode (second mode) from among the control target devices (the illumination devices 1_n (1_1, 1_2, ..., 1_N)) of the control device 200 is M (M is a natural number of 1 to N) in some cases.

FIG. 15A illustrates the setting change screen 400 in a case where the illumination device 1_1 is selected as an operation target device in the single-device operation mode. FIG. 15A illustrates an example in which the illumination device 1_1 has a Dx-directional light diffusion degree Sx of 50 [%] and a Dy-directional light diffusion degree Sy of 50 [%]. As illustrated in FIG. 15A, the values of the Dx-directional light diffusion degree Sx and the Dy-directional light diffusion degree Sy are displayed on the display screen as well. In the following description, the Dx-directional light diffusion degree Sx is referred to as a horizontal diffusion degree Sx, and the Dy-directional light diffusion degree Sy is referred to as a vertical diffusion degree Sy.

FIG. 15B illustrates the setting change screen 400 in a case where the illumination device 1_2 is selected as an operation target device in the single-device operation mode. FIG. 15B illustrates an example in which the horizontal diffusion degree Sx and the vertical diffusion degree Sy of the illumination device 1_2 are both 100 [%].

FIG. 15C illustrates the setting change screen 400 in a case where the illumination device 1_3 is selected as an operation target device in the single-device operation mode. FIG. 15C illustrates an example in which the horizontal diffusion degree Sx and the vertical diffusion degree Sy of the illumination device 1_3 are both 0 [%].

FIG. 15D illustrates the setting change screen 400 in a case where the illumination device 1_4 is selected as an operation target device in the single-device operation mode. FIG. 15D illustrates an example in which the horizontal diffusion degree Sx of the illumination device 1_4 is 100 [%] and the vertical diffusion degree Sy of the illumination device 1_4 is 50 [%].

FIG. 15E illustrates the setting change screen 400 in a case where the illumination devices 1_1, 1_2, and 1_3 are selected as operation target devices in the multiple-device operation mode. FIG. 15E illustrates an example in which the horizontal diffusion degree Sx and the vertical diffusion degree Sy of each of the illumination devices 1_1, 1_2, and 1_3 are set to initial values (default values) in the setting change processing to be described later. Although the initial value of the horizontal diffusion degree Sx and the initial value of the vertical diffusion degree Sy are both 50 [%] in the example illustrated in FIG. 15E, the initial value of the horizontal diffusion degree Sx and the initial value of the vertical diffusion degree Sy are not limited to 50 [%] but may be set to arbitrary values such as 0%, 30%, or 100%. Moreover, the initial value of the horizontal diffusion degree Sx and the initial value of the vertical diffusion degree Sy may be different from each other. A setting change procedure in the multiple-device operation mode will be described in detail in the setting change processing to be described later.

In the present disclosure, the shape of the light distribution shape object OBJ on the setting change screen 400 changes in a circular or elliptical shape along with movement of the first slider S1 and the second slider S2 as illustrated in FIGS. 15A, 15B, 15C, 15D, and 15E.

As illustrated in FIG. 9, in the illumination device 1 as a control target in the present disclosure, a predetermined substantially circular area (outline "d") is irradiated with light even in a case where the horizontal diffusion degree Sx and vertical diffusion degree Sy of the illumination device 1 are both 0 [%]. In the present disclosure, as illustrated in FIG. 15C, the light distribution shape object OBJ in a small circular shape is displayed in a case where the horizontal diffusion degree Sx and the vertical diffusion degree Sy are both 0 [%].

In the present disclosure, as illustrated in FIGS. 15A, 15B, 15C, 15D, and 15E, a first region TA1 is provided as a region in which the first slider S1 can be operated.

The first slider S1 can be moved in the X direction in the first region TA1 between the position on the outline of the light distribution shape object OBJ in a case where the horizontal diffusion degree Sx is 0 [%] and the position on the outline of the light distribution shape object OBJ in a case where the horizontal diffusion degree Sx is 100 [%]. Thus, the first slider S1 does not move when the user's finger moves away from the screen or even when it remains on the screen but moves out of the first region TA1.

In the present disclosure, as illustrated in FIGS. 15A, 15B, 15C, 15D, and 15E, a second region TA2 is provided as a region in which the second slider S2 can be operated.

The second slider S2 can be moved in the Y direction in the second region TA2 between the position on the outline of the light distribution shape object OBJ in a case where the vertical diffusion degree Sy is 0 [%] and the position on the outline of the light distribution shape object OBJ in a case where the vertical diffusion degree Sy is 100 [%]. Thus, the second slider S2 does not move when the user's finger moves away from the screen or even when it remains on the screen but moves out of the second region TA2.

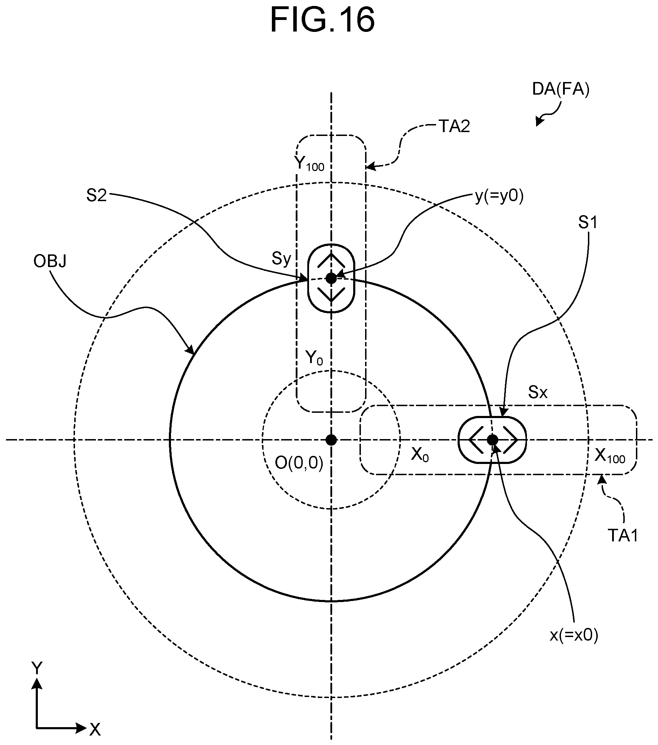

FIG. 16 is a diagram for description of the relation between the position on the setting change screen on the control device according to the first embodiment and the light diffusion degree. In the present disclosure, to facilitate description, the position (coordinate) on the display region DA of the display panel 20 and the position (coordinate) on the detection region FA of the touch sensor 30 are assumed to be equivalent.

On the setting change screen 400 of the control device 200 according to the first embodiment, the horizontal diffusion degree Sx of the illumination device 1 can set based on the movement amount of a position x of an intersection point of the X axis of the XY plane and the outline of the light distribution shape object OBJ.

In the present disclosure, the position x of the intersection point of the X axis and the outline of the light distribution shape object OBJ is the central point of the first slider S1. In other words, a position x0 of the first slider S1 on the display region DA coincides with the position x of the intersection point of the X axis and the outline of the light distribution shape object OBJ. Thus, the horizontal diffusion degree Sx of the illumination device 1 can be set by touching the first slider S1 and moving the first slider S1 in the X-axis direction. In FIG. 16, "Sx" indicates the horizontal diffusion degree (for example, "50" [%]) of the illumination device 1.

The reference movement amount Px in the X direction on the XY plane in a case where a horizontal diffusion degree change amount $\Delta Sx$ of the illumination device 1 is 1 [%] is expressed by Expression (1) below, where $X_{100}$ represents the intersection point of the X axis and the outline of the light distribution shape object OBJ in a case where the horizontal diffusion degree Sx is 100 [%], and $X_0$ represents the intersection point of the X axis and the outline of the light distribution shape object OBJ in a case where the horizontal diffusion degree Sx is 0 [%].

$$Px = (X_{100} - X_0)/100 \qquad\qquad (1)$$

The relation between the horizontal diffusion degree Sx and the position x0 of the first slider S1 on the display region DA on the XY plane is expressed by Expressions (2) and (3) below by using Expression (1) above.

$$Sx = (x0 - X_0)/Px \qquad\qquad (2)$$

$$x0 = Sx \times Px + X_0 \qquad\qquad (3)$$

The vertical diffusion degree Sy of the illumination device 1 can be set based on the movement amount of a position y of an intersection point of the Y axis of the XY plane and the outline of the light distribution shape object OBJ, on the setting change screen 400 of the control device 200 according to the first embodiment.

In the present disclosure, the position y of the intersection point of the Y axis and the outline of the light distribution shape object OBJ is the central point of the second slider S2. In other words, a position y0 of the second slider S2 on the display region DA coincides with the position y of the intersection point of the Y axis and the outline of the light distribution shape object OBJ. Accordingly, the vertical diffusion degree Sy of the illumination device 1 can be set by touching the second slider S2 and moving the second slider S2 in the Y-axis direction. In FIG. 16, "Sy" indicates the vertical diffusion degree (for example, "50" [%]) of the illumination device 1.

The reference movement amount Py in the Y direction on the XY plane in a case where a horizontal diffusion degree change amount $\Delta Sy$ of the illumination device 1 is 1 [%] is expressed by Expression (4) below, where $Y_{100}$ represents the intersection point of the Y axis and the outline of the light distribution shape object OBJ in a case where the vertical diffusion degree Sy is 100 [%], and $Y_0$ represents the intersection point of the Y axis and the outline of the light distribution shape object OBJ in a case where the vertical diffusion degree Sy is 0 [%].

$$Py = (Y_{100} - Y_0)/100 \qquad\qquad (4)$$

The relation between the vertical diffusion degree Sy and the position y0 of the second slider S2 on the display region DA on the XY plane is expressed by Expressions (5) and (6) below by using Expression (4) above.

$$Sy = (y0 - Y_0)/Py \qquad (5)$$

$$y0 = Sy \times Py + Y_0 \qquad (6)$$

The above description is made on the aspect in which the light distribution shape object OBJ in a circular shape is displayed in a case where the horizontal diffusion degree Sx and the vertical diffusion degree Sy are both 0 [%], but the configuration is not limited thereto. For example, the origin O(0, 0) of the XY plane on the setting change screen 400 may be a position in a case where the horizontal diffusion degree Sx and the vertical diffusion degree Sy are both 0 [%].

The following describes a specific example of the setting change processing by the control device 200 for the illumination device 1 according to the first embodiment described above, and the illumination system.

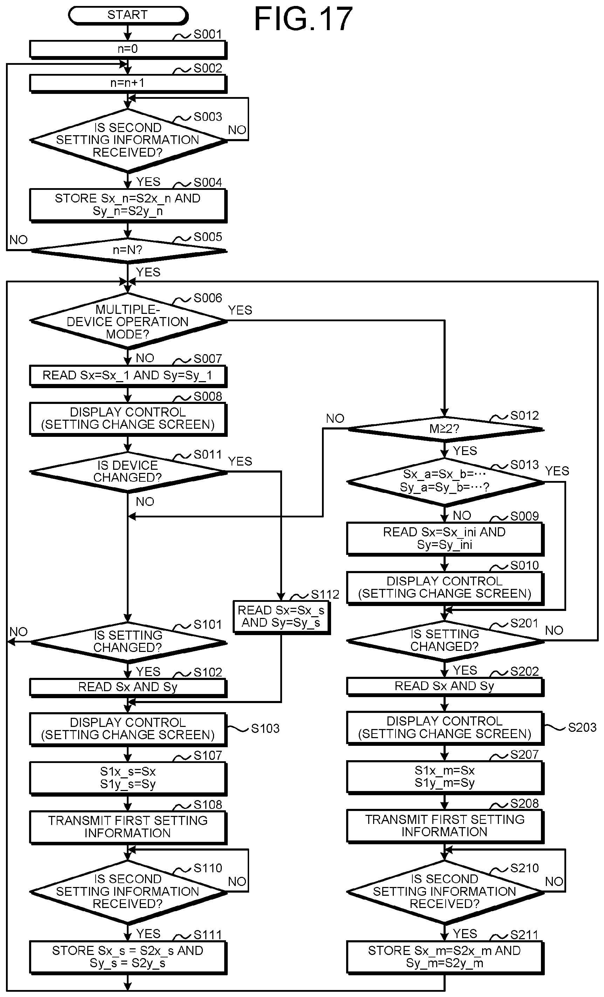

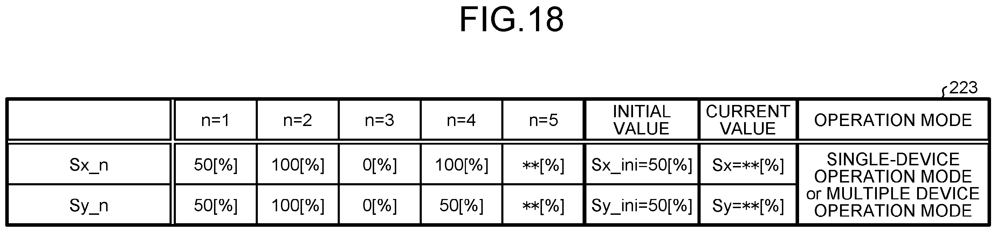

FIG. 17 is a flowchart illustrating an example of the setting change processing by the control device for the illumination device according to the first embodiment. FIG. 18 is a conceptual diagram illustrating an example of a storage region in the control device for the illumination device according to the first embodiment.

The setting change processing illustrated in FIG. 17 is achieved by, for example, application software executed by the CPU of a smartphone, a tablet, or the like constituting the control device 200. Hereinafter, the application software for achieving the setting change processing of the illumination device 1_n in the present disclosure is also simply referred to as a "setting change application".

The setting change application can display, on the display region DA, a device registration screen for registering a control target device in addition to the setting change screen 400 described above. The device registration screen may be a sub screen to which transition is explicitly made when a control target device is to be registered after activation of the setting change application, or may be an initial screen displayed immediately after activation of the setting change application. In the present disclosure, description of an aspect will be made in which upon activation of the setting change application, the single-device operation mode is selected as default setting of the operation mode and the illumination device 1_1 is selected as an operation target device in the single-device operation mode.

When the setting change application is activated, the transmission-reception circuit 225 of the control device 200 transmits, to a control target device (the illumination device 1_n), a command to request the second setting information. Specifically, the transmission-reception circuit 225 resets a device counter value n (n = 0; step S001), adds one to the device counter value n (n = n + 1; step S002), and transmits a command to request the second setting information to an illumination device (for example, the illumination device 1_1) corresponding to the device counter value n (= 1).

The transmission-reception circuit 111 of the illumination device 1_1 reads the second setting information stored in the storage circuit 113 and transmits the second setting information to the control device 200. The electrode drive circuit 112 of the illumination device 1_1 supplies drive voltage corresponding to the second setting information to the drive electrodes 10 and 13 of each liquid crystal cell 2 of the optical element 100.

The transmission-reception circuit 225 of the control device 200 determines whether the second setting information has been received from the illumination device 1_1 (step S003). If the second setting information has not been received from the illumination device 1_1 (No at step S003), the processing at step S003 is repeatedly executed.

If the second setting information has been received from the illumination device 1_1 (Yes at step S003), the transmission-reception circuit 225 stores, in the storage region of the storage circuit 223 illustrated in FIG. 18, the Dx-directional light diffusion degree S2x_1 in the second setting information of the illumination device 1_1 as the horizontal diffusion degree Sx_1, and the Dy-directional light diffusion degree S2y_1 therein as the vertical diffusion degree Sy_1 (step S004).

In FIG. 18, n = 1 corresponds to the horizontal diffusion degree Sx_1 and the vertical diffusion degree Sy_1 of the illumination device 1_1 illustrated in FIG. 15A. n = 2 corresponds to the horizontal diffusion degree Sx_2 and the vertical diffusion degree Sy_2 of the illumination device 1_2 illustrated in FIG. 15B. n = 3 corresponds to the horizontal diffusion degree Sx_3 and the vertical diffusion degree Sy_3 of the illumination device 1_3 illustrated in FIG. 15C. n = 4 corresponds to the horizontal diffusion degree Sx_4 and the vertical diffusion degree Sy_4 of the illumination device 1_4 illustrated in FIG. 15D. In this manner, current values of the horizontal diffusion degree Sx_n and vertical diffusion degree Sy_n of each illumination device 1_n are stored in the storage circuit 223 of the control device 200. In FIG. 18, the horizontal diffusion degree Sx_4 and the vertical diffusion degree Sy_4 of the illumination device 1_5 (n = 5) are "**". The horizontal diffusion degree Sx_n and the vertical diffusion degree Sy_n of each illumination device 1_n are exemplary and are not limited to the example illustrated in FIG. 18.

The transmission-reception circuit 225 determines whether the second setting information has been received from all illumination devices 1_n (in this example, the illumination devices 1_1, 1_2, 1_3, 1_4, and 1_5). Specifically, the control device 200 determines whether the device counter value n is equal to N (step S005).

In the case of n < N (No at step S005), the processing from step S002 to step S005 is repeatedly executed. Specifically, the transmission-reception circuit 225 adds one to the device counter value n (n = n + 1; step S002) and transmits a command to request the second setting information to the illumination device 1_n corresponding to the device counter value n.

The transmission-reception circuit 111 of the illumination device 1_n reads the second setting information stored in the storage circuit 113 and transmits the second setting information to the control device 200. The electrode drive circuit 112 of the illumination device 1_n supplies drive voltage corresponding to the second setting information stored in the storage circuit 113 to the drive electrodes 10 and 13 of each liquid crystal cell 2 of the optical element 100.

The transmission-reception circuit 225 of the control device 200 determines whether the second setting information has been received from the illumination device 1_n (step S003). If the second setting information has not been received from the illumination device 1_n (No at step S003), the processing at step S003 is repeatedly executed.

If the second setting information has been received from the illumination device 1_n (Yes at step S003), the transmission-reception circuit 225 stores, in the storage region of the storage circuit 223 illustrated in FIG. 18, the Dx-directional light diffusion degree S2x_\n in the second setting information of the illumination device 1_n as the horizontal diffusion degree Sx_n, and the Dy-directional light diffusion degree S2y_n therein as the vertical diffusion degree Sy_n (step S004). Thus, the horizontal diffusion degrees Sx_n and the vertical diffusion degrees Sy_n of all of the control target devices (illumination devices 1_n) are acquired and stored in the storage region of the storage circuit 223 (refer to FIG. 18).

Subsequently, the control device 200 determines whether the multiple-device operation mode is selected (step S006).

In the present disclosure, upon activation of the setting change application, the single-device operation mode is selected as default setting (initial setting) of the operation mode as described above. Specifically, the single-device operation mode is selected at step S006 immediately after activation of the setting change application (No at step S006).

In the single-device operation mode immediately after of activation of the setting change application (No at step S006), the display control circuit 231 of the control device 200 reads the horizontal diffusion degree Sx_1 and the vertical diffusion degree Sy_1 of the illumination device 1_1 stored in the storage region of the storage circuit 223 (step S007) and executes display control of the display panel 20 (step S008). The current values in FIG. 18 are the current horizontal diffusion degree Sx and the current vertical diffusion degree Sy displayed on the setting change screen 400, but through the above-described steps S007 and S008, the horizontal diffusion degree Sx_1 and the vertical diffusion degree Sy_1 of the illumination device 1_1 are overwritten as the current horizontal diffusion degree Sx and the current vertical diffusion degree Sy. Thus, the setting change screen 400 reflecting the horizontal diffusion degree Sx_1 and the vertical diffusion degree Sy_1 of the illumination device 1_1 are displayed on the display region DA as a default screen in the single-device operation mode immediately after of activation of the setting change application.

Subsequently, the control device 200 determines whether the operation target device has been changed (step S011).

If the operation target device has not been changed (No at step S011), the display control circuit 231 of the control device 200 determines whether setting change of the setting information (in the present disclosure, light diffusion degree information) of the illumination device 1_s (in the present disclosure, the illumination device 1_1) set as the default operation target device in the single-device operation mode immediately after activation of the setting change application has been executed (step S101). If setting change of the setting information has not been executed (No at step S101), the control device 200 returns to the processing at step S006.

The following describes a specific operation example of setting change of the setting information (in the present disclosure, light diffusion degree information). Specifically, the conversion processing circuit 212 executes, for example, touch detection processing for the first slider S1 and touch detection processing for the second slider S2 on the setting change screen 400. If the first slider S1 is touched, the conversion processing circuit 212 calculates the current horizontal diffusion degree Sx based on the X-directional position of the first slider S1 on the detection region FA and stores the current horizontal diffusion degree Sx in the storage region of the storage circuit 223. More specifically, by such an operation on the first slider S1, the current value of the horizontal diffusion degree Sx illustrated in FIG. 18 is updated and overwritten. If the second slider S2 is touched, the conversion processing circuit 212 calculates the current vertical diffusion degree Sy based on the Y-directional position of the second slider S2 on the detection region FA and stores the current vertical diffusion degree Sy in the storage region of the storage circuit 223. More specifically, by such an operation on the second slider S2, the current value of the vertical diffusion degree Sy illustrated in FIG. 18 is updated and overwritten.

If setting change of the setting information has been executed on the setting change screen 400 (Yes at step S101), the display control circuit 231 of the control device 200 reads the horizontal diffusion degree Sx and the vertical diffusion degree Sy that are the displayed current values subjected to setting change and overwritten on the setting change screen 400 (step S102) and executes display control of the display panel 20 (step S103).

The transmission-reception circuit 225 of the control device 200 transmits the first setting information to the illumination device 1_s (in the present disclosure, the illumination device 1_1) set as the default operation target device upon activation of the setting change application. Specifically, the transmission-reception circuit 225 sets the horizontal diffusion degree Sx and the vertical diffusion degree Sy that are the displayed current values, as the first setting information (S1x_s(S1x_1) = Sx and S1y_s(S1y_1) = Sy; step S107). The transmission-reception circuit 225 transmits the first setting information to the illumination device 1_s (1_1) set as the default operation target device upon activation of the setting change application (step S108).

The transmission-reception circuit 111 of the illumination device 1_s (1_1) stores the received first setting information in the storage circuit 113 as the second setting information. The electrode drive circuit 112 of the illumination device 1_n (1_1) supplies drive voltage corresponding to the second setting information stored in the storage circuit 113 to the drive electrodes 10 and 13 of each liquid crystal cell 2 of the optical element 100. Then, the transmission-reception circuit 111 of the illumination device 1_s (1_1) reads the second setting information in the storage circuit 113 and transmits the second setting information to the control device 200.

The transmission-reception circuit 225 of the control device 200 determines whether the second setting information has been received from the illumination device 1_s (1_1) (step S110). If the second setting information has not been received from the illumination device 1_s (1_1) (No at step S110), the processing at step S110 is repeatedly executed.

If the second setting information has been received from the illumination device 1_s (1_1) (Yes at step S110), the transmission-reception circuit 225 stores, in the storage region of the storage circuit 223, the Dx-directional light diffusion degree S2x_s(S2x_1) in the second setting information of the illumination device 1_s as the horizontal diffusion degree Sx_s(Sx_1), and the Dy-directional light diffusion degree S2y_s(S2y_1) therein as the vertical diffusion degree Sy_s(Sy_1) (step S111). Thus, setting change of the illumination device 1_s (in the present disclosure, the illumination device 1_1) set as the default operation target device in the single-device operation mode immediately after activation of the setting change application is executed.

If the operation target device has been changed from the illumination device 1_s (in the present disclosure, the illumination device 1_1) set as default to another one on the setting change screen 400 (Yes at step S011), the display control circuit 231 of the control device 200 reads the horizontal diffusion degree Sx_s and the vertical diffusion degree Sy_s of the illumination device 1_s (s is a natural number of 1 to N) selected as the operation target device in the single-device operation mode from the storage region of the storage circuit 223; overwrites the horizontal diffusion degree Sx and the vertical diffusion degree Sy, which are the displayed current values, with the horizontal diffusion degree Sx_s and the vertical diffusion degree Sy_s (Sx = Sx_s and Sy = St_s; step S112); and executes display control of the display panel 20 (step S103).

The transmission-reception circuit 225 of the control device 200 transmits the first setting information to the illumination device 1_s selected as the operation target device in the single-device operation mode. Specifically, the transmission-reception circuit 225 sets the horizontal diffusion degree Sx and the vertical diffusion degree Sy that are the displayed current values, as the first setting information (S1x_s= Sx and S1y_s= Sy; step S107). The transmission-reception circuit 225 transmits the first setting information to the illumination device 1_s selected as the operation target device in the single-device operation mode (step S108).

The transmission-reception circuit 111 of the illumination device 1_s stores the received first setting information in the storage circuit 113 as the second setting information. The electrode drive circuit 112 of the illumination device 1_n supplies drive voltage corresponding to the second setting information stored in the storage circuit 113 to the drive electrodes 10 and 13 of each liquid crystal cell 2 of the optical element 100. Then, the transmission-reception circuit 111 of the illumination device 1_s reads the second setting information in the storage circuit 113 and transmits the second setting information to the control device 200.

The transmission-reception circuit 225 of the control device 200 determines whether the second setting information has been received from the illumination device 1_s (step S110). If the second setting information has not been received from the illumination device 1_s (No at step S110), the processing at step S110 is repeatedly executed.

If the second setting information has been received from the illumination device 1_s (Yes at step S110), the transmission-reception circuit 225 stores, in the storage region of the storage circuit 223, the Dx-directional light diffusion degree S2x_s in the second setting information of the illumination device 1_s as the horizontal diffusion degree Sx_s, and the Dy-directional light diffusion degree S2y_s therein as the vertical diffusion degree Sy_s (step S111). Thus, setting change of the illumination device 1_s selected as the operation target device in the single-device operation mode is executed.

If the multiple-device operation mode is selected on the setting change screen 400 (Yes at step S006), the control device 200 determines whether the number M of illumination devices 1 selected as operation target devices in the multiple-device operation mode is equal to or larger than two (step S012). If only one illumination device 1 is selected as an operation target device (M = 1; No at step S012), the control device 200 determines whether setting change of the setting information of the illumination device 1 selected as the operation target device has been executed (step S101). If setting change of the setting information has not been executed (No at step S101), the control device 200 returns to the processing at step S006.

If setting change of the setting information has been executed on the setting change screen 400 (Yes at step S101), the display control circuit 231 of the control device 200 reads the horizontal diffusion degree Sx and the vertical diffusion degree Sy that are the displayed current values subjected to setting change and overwritten on the setting change screen 400 (step S102) and executes display control of the display panel 20 (step S103).

The transmission-reception circuit 225 of the control device 200 transmits the first setting information to the only one illumination device 1_s selected as the operation target device in the multiple-device operation mode. Specifically, the transmission-reception circuit 225 sets the horizontal diffusion degree Sx and the vertical diffusion degree Sy that are the displayed current values, as the first setting information ($S1x\_ = Sx$ and $S1y\_s = Sy$; step S107). The transmission-reception circuit 225 transmits the first setting information to the only one illumination device 1_s selected as the operation target device in the multiple-device operation mode (step S108).

The transmission-reception circuit 111 of the illumination device 1_s stores the received first setting information in the storage circuit 113 as the second setting information. The electrode drive circuit 112 of the illumination device 1_n supplies drive voltage corresponding to the second setting information stored in the storage circuit 113 to the drive electrodes 10 and 13 of each liquid crystal cell 2 of the optical element 100. Then, the transmission-reception circuit 111 of the illumination device 1_s reads the second setting information in the storage circuit 113 and transmits the second setting information to the control device 200.

The transmission-reception circuit 225 of the control device 200 determines whether the second setting information has been received from the illumination device 1_s (step S110). If the second setting information has not been received from the illumination device 1_s (No at step S110), the processing at step S110 is repeatedly executed.

If the second setting information has been received from the illumination device 1_s (Yes at step S110), the transmission-reception circuit 225 stores, in the storage region of the storage circuit 223, the Dx-directional light diffusion degree S2x_s in the second setting information of the illumination device 1_s as the horizontal diffusion degree Sx_s, and the Dy-directional light diffusion degree S2y_s therein as the vertical diffusion degree Sy_s (step S111). Thus, setting change of the only one illumination device 1_s selected as the operation target device in the multiple-device operation mode is executed.

If the number M of illumination devices 1 selected as operation target devices in the multiple-device operation mode is equal to or larger than two ($M \geq 2$; Yes at step S012), the control device 200 determines whether the light distribution shapes of M illumination devices 1_m (1_a, 1_b, ...) selected as operation target devices in the multiple-device operation mode are identical to one another. Specifically, the control device 200 determines whether the horizontal diffusion degrees Sx_m (Sx_a, Sx_b, ...) of the M illumination devices 1_m (1_a, 1_b, ...) are identical to one another and the vertical diffusion degrees Sy_m (Sy_a, Sy_b, ...) of the M illumination devices 1_m (1_a, 1_b, ...) are identical to one another (step S013).

If the light distribution shapes of the M illumination devices 1_m (1_a, 1_b, ...) selected as operation target devices in the multiple-device operation mode are identical to one another (Yes at step S013), transition is made to step S201.

If the light distribution shapes of the M illumination devices 1_m (1_a, 1_b, ...) selected as operation target devices in the multiple-device operation mode are different from one another (No at step S013), the display control circuit 231 of the control device 200 performs the followings: the display control circuit 231 reads a horizontal diffusion degree Sx_ini (in FIG. 18, 50 [%]) that is the initial value (default value) of the horizontal diffusion degree Sx and stored in the storage region of the storage circuit 223, and sets the horizontal diffusion degree Sx_ini as the current value of the horizontal diffusion degree Sx; reads a vertical diffusion degree Sy_ini (in the example illustrated in FIG. 18, 50 [%]) that is the initial value of the vertical diffusion degree Sy, and sets the vertical diffusion degree Sy_ini as the current value of the vertical diffusion degree Sy (Sx = Sx_ini and Sy = Sy_ini; step S009); and then executes display control of the display panel 20 (step S010). Then, transition is made to step S201.

The display control circuit 231 of the control device 200 determines whether setting change of the illumination devices 1_m selected as operation target devices in the multiple-device operation mode has been executed (step S201). If setting change of the setting information has not been executed (No at step S201), the control device 200 returns to the processing at step S006.

If setting change of the setting information has been executed on the setting change screen 400 (Yes at step S201), the display control circuit 231 of the control device 200 reads the horizontal diffusion degree Sx and the vertical diffusion degree Sy that are the displayed current values subjected to setting change and overwritten on the setting change screen 400 (step S202) and executes display control of the display panel 20 (step S203).

The transmission-reception circuit 225 of the control device 200 transmits the first setting information to the M illumination devices 1_m selected as operation target devices in the multiple-device operation mode. Specifically, the transmission-reception circuit 225 sets the horizontal diffusion degree Sx and the vertical diffusion degree Sy that are the displayed current values, as the first setting information ($S1x\_m = Sx$) and $S1y\_m = Sy$; step S207). The transmission-reception circuit 225 transmits the first setting information to the M illumination devices 1_m selected as operation target devices in the multiple-device operation mode (step S208).

The transmission-reception circuit 111 of each of the illumination devices 1_m stores the received first setting information in the storage circuit 113 as the second setting information. The electrode drive circuit 112 of each of the illumination devices 1_m supplies drive voltage corresponding to the second setting information stored in the storage circuit 113 to the drive electrodes 10 and 13 of each liquid crystal cell 2 of the optical element 100. Then, the transmission-reception circuit 111 of each of the illumination devices 1_m reads the second setting information in the storage circuit 113 and transmits the second setting information to the control device 200.

The transmission-reception circuit 225 of the control device 200 determines whether the second setting information has been received from the illumination devices 1_m (step S210). If the second setting information has not been received from the illumination devices 1_m (No at step S210), the processing at step S210 is repeatedly executed.

If the second setting information has been received from the illumination devices 1_m (Yes at step S210), the transmission-reception circuit 225 stores, in the storage region of the storage circuit 223, the Dx-directional light diffusion degree S2x_m in the second setting information of each illumination device 1_m as the horizontal diffusion degree Sx_m, and the Dy-directional light diffusion degree S2y_m therein as the vertical diffusion degree Sy_m (step S211).

The above-described processing from step S206 to step S211 is executed for the M illumination devices 1_m selected as operation target devices in the multiple-device operation mode. Thus, the same setting change is executed for the M illumination devices 1_m selected as operation target devices in the multiple-device operation mode.

With the control device 200 for the illumination device 1 according to the first embodiment described above, and the illumination system, the same setting information (in the present disclosure, light diffusion degree information) can be set at once to the illumination devices 1_m selected upon selection of the multiple-device operation mode from among the illumination devices 1_n registered as control target devices in advance.

In the aspect described above in the first embodiment, the setting change screen 400 is displayed for each illumination device 1_n (refer to FIGS. 15A, 15B, 15C, 15D, and 15E), but the present disclosure is not limited to the aspect in which the setting change screen 400 is displayed for each illumination device 1_n. For example, in a case of a tablet or the like having the sufficiently large display region DA of the control device 200, setting change of a plurality of illumination devices 1_n registered as control target devices may be performed on one screen.

(Second embodiment)

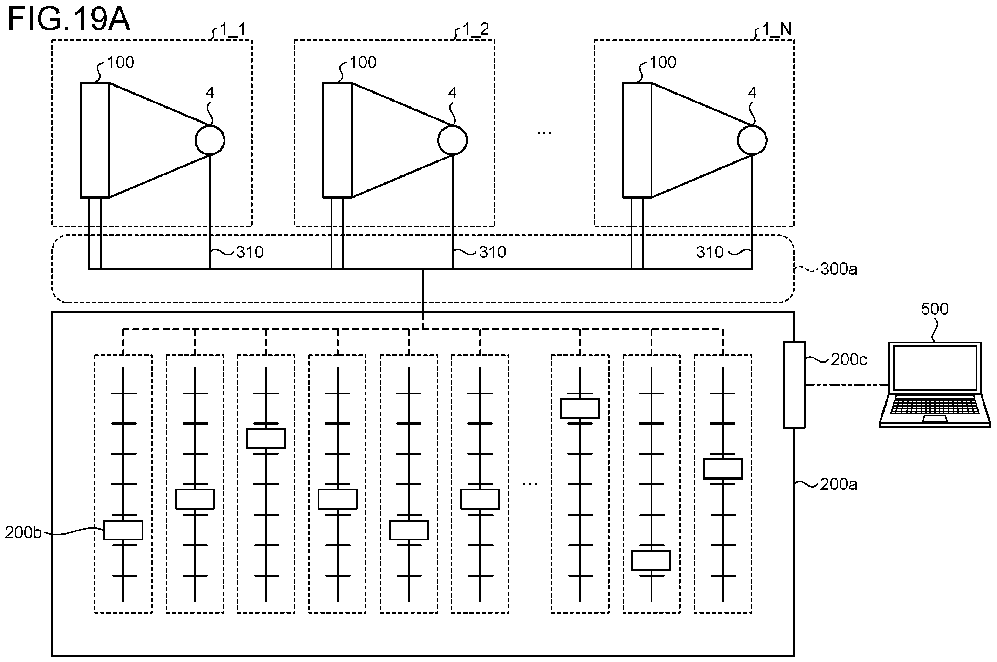

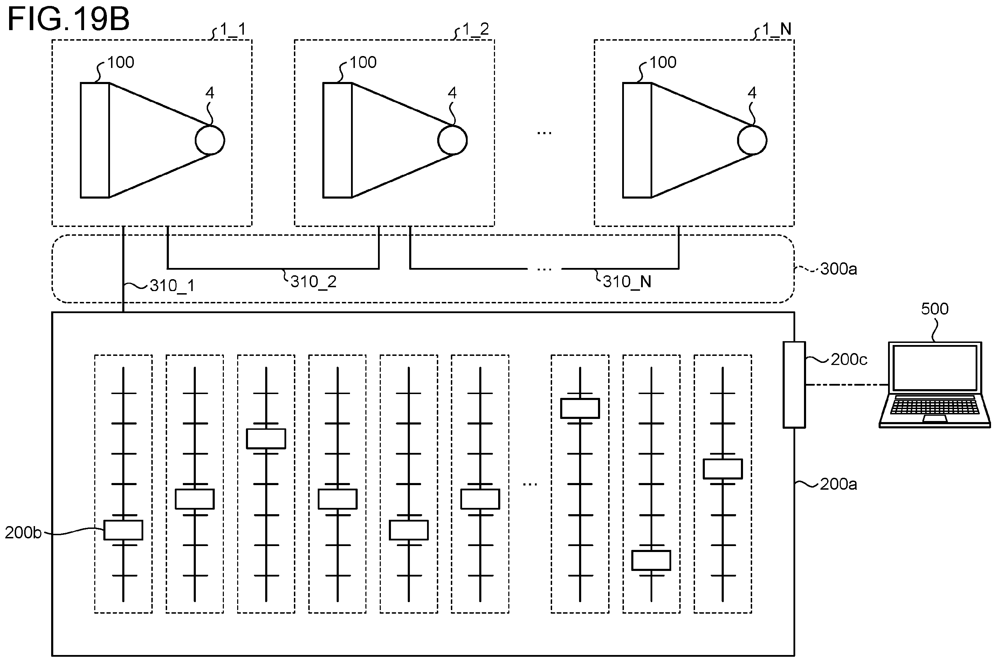

FIG. 19A is a schematic view illustrating an example of the configuration of an illumination system according to a second embodiment. In FIG. 19A, a plurality of illumination devices 1_1, 1_2, ..., and 1_N are coupled to an illumination control device (control device) 200a through a communication means 300a including a plurality of wiring lines 310. More specifically, the illumination control device 200a is, for example, a DMX controller. The DMX controller can adjust the brightness and color of emission light from the illumination devices 1_1, 1_2, ..., and 1_N and can also operate the optical element 100 of each of the illumination device 1_1, 1_2, ..., and 1_N, thereby changing the light distribution shape of emission light from each of the illumination devices 1_1, 1_2, ..., and 1_N. FIG. 19B is a schematic view illustrating a specific coupling example in which the illumination control device is a DMX controller in the configuration of the illumination system according to the second embodiment. In a case where the illumination control device 200a is a DMX controller, the illumination control device 200a and the illumination devices 1_1, 1_2, ..., and 1_N are daisy-chained as illustrated in FIG. 19B. More specifically, the illumination control device 200a and the illumination device 1_1 are coupled to each other through a cable 310_1, and the illumination device 1_1 and the illumination device 1_2 are coupled to each other through a cable 310_2. Subsequently, the preceding illumination device and the succeeding illumination device are sequentially coupled to each other through a cable.

The illumination system includes the multiple illumination devices 1_1, 1_2, ..., and 1_N and the single illumination control device 200a, and these devices are coupled in a wired manner. More specifically, each of the illumination devices 1_1, 1_2, ..., and 1_N includes the light source 4 and the optical element 100 as in the above-described first embodiment, and the illumination control device 200a includes a plurality of physical sliders 200b. The light source 4 and the optical element 100 of each of the illumination devices 1_1, 1_2, ..., and 1_N are coupled to the illumination control device 200a through the wiring lines 310 (or the cables 310_1, 310_2, ..., 310_N), and therefore, each light source 4 or each optical element 100 can be driven by moving the corresponding physical slider (hereinafter referred to as slider) 200b upward and downward. More specifically, the light sources 4 correspond to the sliders 200b on a one-to-one basis, and the brightness of emission light from the light sources 4 can be changed by moving the sliders 200b upward and downward. A configuration in which the color of emission light from the light source 4 is changed by moving the slider 200b upward and downward may be employed, or both brightness and color may be changed. Alternatively, it is possible to employ a configuration in which each light source 4 corresponds to two sliders 200b such that the brightness of emission light from the light source 4 is changed by moving one of the sliders 200b upward and downward and the color of emission light from the light source 4 is changed by moving the other slider 200b upward and downward.

Two wiring lines 310 are extended from the optical element 100 of each of the illumination devices 1_1, 1_2, ...,

and 1_N and coupled to the illumination control device 200a. Thus, each optical element 100 corresponds to two sliders 200b such that the horizontal diffusion degree of the optical element 100 can be changed by moving one of the sliders 200b upward and downward and the vertical diffusion degree of the optical element 100 can be changed by moving the other slider 200b upward and downward. The vertical and horizontal diffusion degrees of a plurality of optical elements 100 can be simultaneously changed by simultaneously moving a plurality of sliders 200b upward and downward. It is possible to employ a configuration in which an additional slider 200b corresponding to more than one optical element 100 selectively selected from among the optical elements 100 is provided and the diffusion degrees of the selected optical elements 100 are changed by moving the slider 200b upward and downward.

Such a correspondence in which the diffusion degrees of one optical element 100 are changed by operating the corresponding sliders 200b of the illumination control device 200a may be referred to as the single-device operation mode (first mode), corresponding to the above-described first embodiment. Such an aspect in which the diffusion degrees of a plurality of optical elements 100 are simultaneously changed by operating the corresponding one or plurality of sliders 200b of the illumination control device 200a may be referred to as the multiple-device operation mode (second mode), corresponding to the above-described first embodiment.

The illumination control device 200a can be coupled to an external control device 500 such as a PC through a port 200c, and it is possible to change setting of the illumination control device 200a by the external control device 500. More specifically, it is possible by the external control device 500 to change the combination of the correspondence relation between the sliders 200b and the illumination device 1_1, 1_2, ..., or 1_N and the change the diffusion degrees and the degrees of brightness of emission light from each of the illumination devices 1_1, 1_2, ..., and 1_N through upward and downward movement of the corresponding sliders 200b. Alternatively, it is possible to employ a configuration in which the external control device 500 and the illumination control device 200a are maintained in the coupled state to collectively function as the control device 200.

In the configurations illustrated in FIGS. 19A and 19B, as well, it is possible to employ a correspondence in which each of the illumination devices 1_1, 1_2, ..., and 1_N is coupled to the illumination control device 200a including the sliders 200b by a wireless communication means as in the first embodiment.

The preferable embodiments of the present disclosure are described above, but the present disclosure is not limited to the embodiments. Contents disclosed in the embodiments are merely exemplary and may be modified in various kinds of manners without departing from the scope of the present disclosure. Appropriate modifications made without departing from the scope of the present disclosure naturally belong to the technical scope of the present disclosure.

Reference Signs List

1 illumination device
2 liquid crystal cell
2_1 first liquid crystal cell
2_2 second liquid crystal cell
2_3 third liquid crystal cell
2_4 fourth liquid crystal cell
4 light source
5 first substrate
6 second substrate
7 sealing member
8 liquid crystal layer
9 base member
10, 10a, 10b drive electrode
11 first metal line
11a, 11b, 11c, 11d metal line
12 base member
13, 13a, 13b drive electrode
14 second metal line
14a, 14b metal line
15a, 15b conduction part
16a, 16b coupling terminal part
17 liquid crystal molecule
18 alignment film
19 alignment film

20 display panel
30 touch sensor
31 detection element
100 optical element
111 transmission-reception circuit
112 electrode drive circuit
113 storage circuit (second storage circuit)
200 control device
200a illumination control device (control device)
200b physical slider (slider)
200c port
211 detection circuit
212 conversion processing circuit
223 storage circuit (first storage circuit)
225 transmission-reception circuit
231 display control circuit
300 communication means (wireless communication means)
300a communication means (wired communication means)
310 wiring line
310_1, 310_2, 310_N cable
400 setting change screen
500 external control device
AA effective region
DA display region
DSEL device selection switch
FA detection region
GA peripheral region
MSEL selection switch (multiple-device operation mode (second mode))
OBJ light distribution shape object
S1 first slider
S2 second slider
SSEL selection switch (single-device operation mode (first mode))
Sx horizontal diffusion degree
S1x, S2x Dx-directional light diffusion degree
Sy vertical diffusion degree
S1y, S2y Dy-directional light diffusion degree
TA1 first region
TA2 second region

## Claims

1. An illumination system comprising:

a plurality of illumination devices each including a light source and an optical element, the optical element being provided on an optical axis of the light source and capable of setting a light distribution state of light emitted from the light source in two directions of a first direction and a second direction intersecting the first direction; and
a control device configured to control the illumination devices to change the light distribution states, wherein the control device includes

a touch sensor including a detection region in which a plurality of detection elements are provided,
a display panel provided with a display region overlapping the detection region of the touch sensor in plan view, and
a first storage circuit configured to store setting information at least including setting values of the light distribution states, and

the control device is configured to transmit the setting information to one, some, or all of the illumination devices when change of the setting value is performed, and

each illumination device includes a second storage circuit configured to store the setting information transmitted from the control device.

2. The illumination system according to claim 1, wherein the control device is configured to transmit the same setting information to one, some or all of the illumination devices when change of the setting value is performed.

3. The illumination system according to claim 1, wherein the control device has

a first mode in which one illumination device is selected from among the illumination devices, and
a second mode in which more than one illumination device is selected from among the illumination devices,
the control device is configured to transmit the setting information to the one selected illumination device when change of the setting value is performed in the first mode, and
the control device is configured to transmit the same setting information to the selected illumination devices when change of the setting value is performed in the second mode.

4. A control device configured to control a plurality of illumination devices each capable of setting a light distribution shape of light emitted from a light source in two directions of a first direction and a second direction intersecting the first direction, the control device comprising:

a touch sensor including a detection region in which a plurality of detection elements are provided;
a display panel provided with a display region overlapping the detection region of the touch sensor in plan view; and
a storage circuit configured to store setting information at least including setting values of the light distribution shapes, wherein
the setting information is transmitted to one, some, or all of the illumination devices when change of the setting value is performed.

5. The control device according to claim **4,** wherein the same setting information is transmitted to one, some, or all of the illumination devices when change of the setting value is performed.

6. The control device according to claim **4,** wherein

the control device has
a first mode in which one illumination device is selected from among the illumination devices, and
a second mode in which more than one illumination device is selected from among the illumination devices,
the control device is configured to transmit the setting information to the one selected illumination device when change of the setting value is performed in the first mode, and
the control device is configured to transmit the same setting information to the selected illumination devices when change of the setting value is performed in the second mode.

# FIG.1A

# FIG.1B

# FIG.2

# FIG.3

# FIG.4

# FIG.5

EP 4 580 316 A1

# FIG.6A

# FIG.6B

# FIG.7

# FIG.8A

Dz ↑

| | | | |
|---|---|---|---|
| FOURTH LIQUID CRYSTAL CELL | SECOND SUBSTRATE | p | s |
| | LIQUID CRYSTAL LAYER | ↑ | ↑ |
| | FIRST SUBSTRATE | s | p |
| THIRD LIQUID CRYSTAL CELL | SECOND SUBSTRATE | s | p |
| | LIQUID CRYSTAL LAYER | ↑ | ↑ |
| | FIRST SUBSTRATE | p | s |
| SECOND LIQUID CRYSTAL CELL | SECOND SUBSTRATE | p | s |
| | LIQUID CRYSTAL LAYER | ↑ | ↑ |
| | FIRST SUBSTRATE | s | p |
| FIRST LIQUID CRYSTAL CELL | SECOND SUBSTRATE | s | p |
| | LIQUID CRYSTAL LAYER | ↑ | ↑ |
| | FIRST SUBSTRATE | p | s |

⇧

| LIGHT SOURCE | p | s |
|---|---|---|

# FIG.8B

Dz ↑

| | | | |
|---|---|---|---|
| FOURTH LIQUID CRYSTAL CELL | SECOND SUBSTRATE | p DIFFUSION | s |
| | LIQUID CRYSTAL LAYER | ↑ | ↑ |
| | FIRST SUBSTRATE | s DIFFUSION | p |
| THIRD LIQUID CRYSTAL CELL | SECOND SUBSTRATE | s | p DIFFUSION |
| | LIQUID CRYSTAL LAYER | ↑ | ↑ |
| | FIRST SUBSTRATE | p | s DIFFUSION |
| SECOND LIQUID CRYSTAL CELL | SECOND SUBSTRATE | p | s DIFFUSION |
| | LIQUID CRYSTAL LAYER | ↑ | ↑ |
| | FIRST SUBSTRATE | s | p DIFFUSION |
| FIRST LIQUID CRYSTAL CELL | SECOND SUBSTRATE | s DIFFUSION | p |
| | LIQUID CRYSTAL LAYER | ↑ | ↑ |
| | FIRST SUBSTRATE | p DIFFUSION | s |

| LIGHT SOURCE | p | s |
|---|---|---|

# FIG.8C

| | | | |
|---|---|---|---|
| FOURTH LIQUID CRYSTAL CELL | SECOND SUBSTRATE | p DIFFUSION | s |
| | LIQUID CRYSTAL LAYER | ↑ | ↑ |
| | FIRST SUBSTRATE | s | p |
| THIRD LIQUID CRYSTAL CELL | SECOND SUBSTRATE | s | p DIFFUSION |
| | LIQUID CRYSTAL LAYER | ↑ | ↑ |
| | FIRST SUBSTRATE | p | s |
| SECOND LIQUID CRYSTAL CELL | SECOND SUBSTRATE | p | s |
| | LIQUID CRYSTAL LAYER | ↑ | ↑ |
| | FIRST SUBSTRATE | s | p DIFFUSION |
| FIRST LIQUID CRYSTAL CELL | SECOND SUBSTRATE | s | p |
| | LIQUID CRYSTAL LAYER | ↑ | ↑ |
| | FIRST SUBSTRATE | p DIFFUSION | s |

| LIGHT SOURCE | p | s |
|---|---|---|

Dz

# FIG.8D

Dz ↑

| | | | |
|---|---|---|---|
| FOURTH LIQUID CRYSTAL CELL | SECOND SUBSTRATE | p | s |
| | LIQUID CRYSTAL LAYER | ↑ | ↑ |
| | FIRST SUBSTRATE | s DIFFUSION | p |
| THIRD LIQUID CRYSTAL CELL | SECOND SUBSTRATE | s | p |
| | LIQUID CRYSTAL LAYER | ↑ | ↑ |
| | FIRST SUBSTRATE | p | s DIFFUSION |
| SECOND LIQUID CRYSTAL CELL | SECOND SUBSTRATE | p | s DIFFUSION |
| | LIQUID CRYSTAL LAYER | ↑ | ↑ |
| | FIRST SUBSTRATE | s | p |
| FIRST LIQUID CRYSTAL CELL | SECOND SUBSTRATE | s DIFFUSION | p |
| | LIQUID CRYSTAL LAYER | ↑ | ↑ |
| | FIRST SUBSTRATE | p | s |

⇧

| | | |
|---|---|---|
| LIGHT SOURCE | p | s |

# FIG.9

# FIG.10

# FIG.11

200

20    30

IC
(DETEC-
TION IC,
DISPLAY IC)

CPU,RAM,
EEPROM,
ROM,GPU

# FIG.12

# FIG.13

# FIG.14

# FIG.15A

# FIG.15B

# FIG.15C

# FIG.15D

# FIG.15E

# FIG.16

# FIG.17

START

n=0 ~S001

n=n+1 ~S002

IS SECOND SETTING INFORMATION RECEIVED? ~S003 → NO

YES ~S004

STORE Sx_n=S2x_n AND Sy_n=S2y_n

n=N? ~S005 → NO

YES

MULTIPLE-DEVICE OPERATION MODE? ~S006 → YES

NO ~S007

READ Sx=Sx_1 AND Sy=Sy_1

DISPLAY CONTROL (SETTING CHANGE SCREEN) ~S008

IS DEVICE CHANGED? ~S011 → YES

NO

M≥2? ~S012 → NO

YES

Sx_a=Sx_b=··· Sy_a=Sy_b=···? ~S013 → YES

NO ~S009

READ Sx=Sx_ini AND Sy=Sy_ini

DISPLAY CONTROL (SETTING CHANGE SCREEN) ~S010

READ Sx=Sx_s AND Sy=Sy_s ~S112

IS SETTING CHANGED? ~S101 → NO

YES ~S102

READ Sx AND Sy

IS SETTING CHANGED? ~S201 → NO

YES ~S202

READ Sx AND Sy

DISPLAY CONTROL (SETTING CHANGE SCREEN) ~S103

S1x_s=Sx S1y_s=Sy ~S107

TRANSMIT FIRST SETTING INFORMATION ~S108

IS SECOND SETTING INFORMATION RECEIVED? ~S110 → NO

YES ~S111

STORE Sx_s = S2x_s AND Sy_s = S2y_s

DISPLAY CONTROL (SETTING CHANGE SCREEN) ~S203

S1x_m=Sx S1y_m=Sy ~S207

TRANSMIT FIRST SETTING INFORMATION ~S208

IS SECOND SETTING INFORMATION RECEIVED? ~S210 → NO

YES ~S211

STORE Sx_m=S2x_m AND Sy_m=S2y_m

## FIG.18

| | n=1 | n=2 | n=3 | n=4 | n=5 | INITIAL VALUE | CURRENT VALUE | OPERATION MODE |
|---|---|---|---|---|---|---|---|---|
| Sx_n | 50[%] | 100[%] | 0[%] | 100[%] | **[%] | Sx_ini=50[%] | Sx=**[%] | SINGLE-DEVICE OPERATION MODE or MULTIPLE DEVICE OPERATION MODE |
| Sy_n | 50[%] | 100[%] | 0[%] | 50[%] | **[%] | Sy_ini=50[%] | Sy=**[%] | |

223

FIG.19A

**FIG.19B**

## INTERNATIONAL SEARCH REPORT

International application No.

**PCT/JP2023/023330**

### A. CLASSIFICATION OF SUBJECT MATTER

***H05B 47/10***(2020.01)i; ***H05B 45/10***(2020.01)i; ***H05B 45/20***(2020.01)i; ***H05B 47/105***(2020.01)i; ***H05B 47/155***(2020.01)i; ***H05B 47/19***(2020.01)i

FI: H05B47/10; H05B45/10; H05B45/20; H05B47/105; H05B47/155; H05B47/19

According to International Patent Classification (IPC) or to both national classification and IPC

### B. FIELDS SEARCHED

Minimum documentation searched (classification system followed by classification symbols)

H05B 39/00-39/10, 45/00-45/58, 47/00-47/29

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-93147 A (JAPAN SCIENCE AND TECHNOLOGY AGENCY) 19 May 2014 (2014-05-19) entire text, all drawings | 1-6 |
| A | WO 2018/055722 A1 (MAXELL, LTD.) 29 March 2018 (2018-03-29) entire text, all drawings | 1-6 |
| A | WO 2021/166807 A1 (SONY GROUP CORP.) 26 August 2021 (2021-08-26) entire text, all drawings | 1-6 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 August 2023** | **05 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/023330**

| Patent document cited in search report | | | Publication date (day/month/year) | Patent family member(s) | Publication date (day/month/year) |
|---|---|---|---|---|---|
| JP | 2014-93147 | A | 19 May 2014 | (Family: none) | |
| WO | 2018/055722 | A1 | 29 March 2018 | (Family: none) | |
| WO | 2021/166807 | A1 | 26 August 2021 | EP          4108980          A1 entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02065001 A